(19) **Europäisches Patentamt / European Patent Office / Office européen des brevets**

(11) **EP 4 668 216 A1**

(12) **EUROPEAN PATENT APPLICATION**
published in accordance with Art. 153(4) EPC

(43) Date of publication:
24.12.2025 Bulletin 2025/52

(21) Application number: 24858429.4

(22) Date of filing: 22.08.2024

(51) International Patent Classification (IPC):
*G06T 15/00* (2011.01)

(52) Cooperative Patent Classification (CPC):
G06T 15/00

(86) International application number:
PCT/CN2024/113912

(87) International publication number:
WO 2025/044887 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.08.2023 CN 202311102975
08.09.2023 CN 202311163041

(71) Applicant: Huawei Technologies Co., Ltd.
Shenzhen, Guangdong 518129 (CN)

(72) Inventors:
• ZHAO, Yanfeng
  Shenzhen, Guangdong 518129 (CN)
• WANG, Shu
  Shenzhen, Guangdong 518129 (CN)
• ZHENG, Tianji
  Shenzhen, Guangdong 518129 (CN)

(74) Representative: Maiwald GmbH
Engineering
Elisenhof
Elisenstrasse 3
80335 München (DE)

(54) **IMAGE RENDERING METHOD AND RELATED APPARATUS**

(57) An image rendering method and a related apparatus are provided and are applied to a terminal device. The method includes: receiving an $m^{th}$ group of to-be-rendered image data sent by an application, where the image data includes a plurality of pixel values for generating an image, $m \geq 1$, and m is an integer; performing rendering based on all the pixel values in the $m^{th}$ group of image data to generate an $m^{th}$ frame of image; receiving an $(m+1)^{th}$ group of to-be-rendered image data sent by the application; and performing rendering based on a static pixel of the $m^{th}$ frame of image and at least a part of pixel values in the $(m+1)^{th}$ group of image data to generate an $(m+1)^{th}$ frame of image, where the static pixel of the $m^{th}$ frame of image is obtained based on the $m^{th}$ group of image data. A part of pixel values of a previous frame of image of the frame of image is reused for performing rendering to generate at least one frame of image in a plurality of to-be-rendered frames of images. This helps reduce power consumption of shading computation of the terminal device, reduce occurrence of overheating, lagging, and the like, and further improve user experience.

1600

1610: Receive an $m^{th}$ group of to-be-rendered image data sent by an application

1620: Perform rendering based on all pixel values in the $m^{th}$ group of image data to generate an $m^{th}$ frame of image

1630: Receive an $(m+1)^{th}$ group of to-be-rendered image data sent by the application

1640: Perform rendering based on a static pixel of the $m^{th}$ frame of image and at least a part of pixel values in the $(m+1)^{th}$ group of image data to generate an $(m+1)^{th}$ frame of image

FIG. 16

**Description**

This application claims priorities to Chinese Patent Application No. 202311102975.0, filed with the China National Intellectual Property Administration on August 29, 2023 and entitled "IMAGE RENDERING METHOD AND RELATED APPARATUS", and to Chinese Patent Application No. 202311163041.8, filed with the China National Intellectual Property Administration on September 8, 2023 and entitled "IMAGE RENDERING METHOD AND RELATED APPARATUS", both of which are incorporated herein by reference in their entireties.

**TECHNICAL FIELD**

This application relates to the field of terminal technologies, and in particular, to an image rendering method and a related apparatus.

**BACKGROUND**

With improvement in a screen resolution and refresh rate, requirements for shading computation are increasing sharply.

In a current image rendering method, shading computation has high power consumption. In the field of rendering at a mobile end, overheating, lagging, and the like occur at the mobile end due to limitations of a computing capability, bandwidth, and heat dissipation of the mobile end, leading to a frequency limitation, a frame limitation, and the like in some applications (for example, game applications). As a result, user experience is affected.

Therefore, how to reduce power consumption of shading computation at a mobile end becomes an urgent technical problem to be resolved.

**SUMMARY**

This application provides an image rendering method and a related apparatus, to reduce power consumption of shading computation at a mobile end.

According to a first aspect, this application provides an image rendering method. The method may be performed by a terminal device at a mobile end, or the method may be performed by a component (like a chip or a chip system) configured in the terminal device at a mobile end, or may be implemented by a logical module or software that can implement all or some functions of the terminal device at a mobile end. This is not limited in this application.

For example, the method includes: receiving an $m^{th}$ group of to-be-rendered image data sent by an application, where the $m^{th}$ group of image data includes a plurality of pixel values for generating an image, $m \geq 1$, and m is an integer; and performing rendering based on the $m^{th}$ group of image data to generate an $m^{th}$ frame of image, where when m mod N=1, the $m^{th}$ frame of image is obtained by performing rendering based on all the pixel values in the $m^{th}$ group of image data; or when m mod N≠1, the $m^{th}$ frame of image is obtained by performing rendering based on a static pixel of an $i^{th}$ frame of image and at least a part of pixel values in the $m^{th}$ group of image data, and the static pixel of the $i^{th}$ frame of image is obtained based on an $i^{th}$ group of image data; and N is a preset integer, $N \geq 2$, and $\left(\left\lceil \frac{m}{N} \right\rceil - 1\right) \times N + 1 \leq i \leq m-1$ .

"mod" is a modulo operator for finding a remainder of division between two numbers, and "$\left\lceil \frac{m}{N} \right\rceil$" means rounding up of (m/N).

Based on the foregoing solution, N frames of images are used as a group, and a first frame of image in the N frames of images is obtained based on a currently known rendering procedure, that is, a first frame of image in the N frames of images may be obtained by performing rendering based on all pixel values in image data of the first frame of image. At least one frame of image in another image in the N frames of images except the first frame of image may be obtained by performing rendering based on a static pixel of a previous frame of image of the image in the group of images, and at least a part of pixel values in image data of the image. In this way, a part of pixel values in another image in the group is reused for performing rendering to generate at least one frame of image in each group of images. This helps reduce power consumption of shading computation at the mobile end, reduce occurrence of overheating, lagging, and the like, and further improve user experience.

With reference to the first aspect, in some possible implementations, the method further includes: intercepting one or more rendering commands corresponding to the $m^{th}$ frame of image.

With reference to the first aspect, in some possible implementations, before performing rendering to generate the $m^{th}$ frame of image, the method further includes: determining, based on feature or features of the one or more rendering commands (Drawcall) corresponding to the $m^{th}$ frame of image, a static pixel and a dynamic pixel of the $m^{th}$ frame of image.

With reference to the first aspect, in some possible implementations, after determining the static pixel and the dynamic pixel of the $m^{th}$ frame of image, the method further includes: marking the static pixel and the dynamic pixel based on an alpha (alpha, A) channel or a stencil buffer (stencil buffer), where both the static pixel and the dynamic pixel include an RGBA channel.

With reference to the first aspect, in some possible implementations, the feature of the rendering command includes one or more of the following: a program alias (program label), a program variable name (program uniform name), or a program index buffer name (program index buffer name).

With reference to the first aspect, in some possible implementations, determining, based on the feature or features of the one or more rendering commands corresponding to the $m^{th}$ frame of image, the static pixel and the dynamic pixel of the $m^{th}$ frame of image includes: determining, based on a feature of each of the one or more rendering commands, a static object and a dynamic object that are included in the $m^{th}$ frame of image; determining the static pixel based on the static object; and determining the dynamic pixel based on the dynamic object.

With reference to the first aspect, in some possible implementations, determining, based on the feature or features of the one or more rendering commands corresponding to the $m^{th}$ frame of image, the static pixel and the dynamic pixel of the $m^{th}$ frame of image includes: determining, based on a feature of each of the one or more rendering commands, a static object and a dynamic object that are included in the $m^{th}$ frame of image, to obtain a motion vector set of the $m^{th}$ frame of image; and determining, based on the motion vector set, the static pixel and the dynamic pixel, where a value of a motion vector corresponding to the static object is different from a value of a motion vector corresponding to the dynamic object.

With reference to the first aspect, in some possible implementations, when m mod N≠1, and after determining the static object included in the $m^{th}$ frame of image, the method further includes: reducing a shading rate of the static object in the $m^{th}$ frame of image, where the $m^{th}$ frame of image is rendered based on an updated shading rate.

Reducing the shading rate of the static object can further reduce power consumption of shading computation at the mobile end, reduce occurrence of overheating, lagging, and the like, and improve user experience.

With reference to the first aspect, in some possible implementations, when m mod N≠1, performing rendering based on the $m^{th}$ group of image data to generate the $m^{th}$ frame of image includes: corresponding screen space coordinates of the $i^{th}$ frame of image to screen space coordinates of the $m^{th}$ frame of image; and when both a pixel in a first screen space corresponding to the $i^{th}$ frame of image and a pixel in a first screen space corresponding to the $m^{th}$ frame of image are static pixels, reusing the pixel in the first screen space of the $i^{th}$ frame of image to render the first screen space of the $m^{th}$ frame of image; or when both a pixel in a second screen space corresponding to the $i^{th}$ frame of image and a pixel in a second screen space corresponding to the $m^{th}$ frame of image are dynamic pixels, or when a type of the pixel in the second screen space of the $i^{th}$ frame of image and a type of the pixel in the second screen space of the $m^{th}$ frame of image are different, rendering the second screen space of the $m^{th}$ frame of image based on the pixel in the second screen space of the $m^{th}$ frame of image.

According to a second aspect, this application provides an image rendering method. The method may be performed by a terminal device at a mobile end, or the method may be performed by a component (like a chip or a chip system) configured in the terminal device at a mobile end, or may be implemented by a logical module or software that can implement all or some functions of the terminal device at a mobile end. This is not limited in this application.

For example, the method includes: receiving an $m^{th}$ group of to-be-rendered image data sent by an application, where the image data includes a plurality of pixel values for generating an image, m≥1, and m is an integer; performing rendering based on all the pixel values in the $m^{th}$ group of image data to generate an $m^{th}$ frame of image; receiving an $(m+1)^{th}$ group of to-be-rendered image data sent by the application; and performing rendering based on a static pixel of the $m^{th}$ frame of image and at least a part of pixel values in the $(m+1)^{th}$ group of image data to generate an $(m+1)^{th}$ frame of image, where the static pixel of the $m^{th}$ frame of image is obtained based on the $m^{th}$ group of image data.

Based on the foregoing solution, a part of pixel values of a previous frame of image of the frame of image is reused for performing rendering to generate at least one frame of image in a plurality of to-be-rendered frames of images. This helps reduce power consumption of shading computation of the terminal device at the mobile end, reduce occurrence of overheating, lagging, and the like, and further improve user experience.

With reference to the second aspect, in some possible implementations, before performing rendering to generate the $(m+1)^{th}$ frame of image, the method further includes: determining, based on a feature or features of one or more rendering commands corresponding to a $y^{th}$ frame of image, a static pixel and a dynamic pixel of the $y^{th}$ frame of image, where y∈[m, m+1].

With reference to the second aspect, in some possible implementations, determining, based on the feature or features of the one or more rendering commands corresponding to the $y^{th}$ frame of image, the static pixel and the dynamic pixel of the $y^{th}$ frame of image includes: determining, based on a feature of each of the one or more rendering commands, a static object and a dynamic object that are included in the $y^{th}$ frame of image; determining the static pixel of the $y^{th}$ frame of image based on the static object; and determining the dynamic pixel of the $y^{th}$ frame of image based on the dynamic object.

With reference to the second aspect, in some possible implementations, after determining the static pixel and the dynamic pixel of the $y^{th}$ frame of image, the method further includes: marking the static pixel and the dynamic pixel based on an A channel or a stencil buffer, where both the static pixel and the dynamic pixel include an RGBA channel.

With reference to the second aspect, in some possible implementations, determining, based on the feature or features of the one or more rendering commands corresponding to the $y^{th}$ frame of image, the static pixel and the dynamic pixel of the $y^{th}$ frame of image includes: determining, based on a feature of each of the one or more rendering commands, a static object and a dynamic object that are included in the $y^{th}$ frame of image, to obtain a motion vector set of the $y^{th}$ frame of image; and determining, based on the motion vector set, the static pixel and the dynamic pixel of the $y^{th}$ frame of image, where a value of a motion vector corresponding to the static object in the $y^{th}$ frame of image is different from a value of a motion vector corresponding to the dynamic object in the $y^{th}$ frame of image.

With reference to the second aspect, in some possible implementations, after determining the static object included in the $(m+1)^{th}$ frame of image, the method further includes: reducing a shading rate of the static object in the $(m+1)^{th}$ frame of image, where the $(m+1)^{th}$ frame of image is rendered based on an updated shading rate.

Reducing the shading rate of the static object can further reduce power consumption of shading computation at the mobile end, reduce occurrence of overheating, lagging, and the like, and improve user experience.

With reference to the second aspect, in some possible implementations, the feature of the rendering command includes one or more of the following: a program alias, a program variable name, or a program index buffer name.

With reference to the second aspect, in some possible implementations, the method further includes: intercepting one or more rendering commands corresponding to the $y^{th}$ frame of image.

With reference to the second aspect, in some possible implementations, performing rendering based on the static pixel of the $m^{th}$ frame of image and the at least a part of pixel values in the $(m+1)^{th}$ group of image data to generate the $(m+1)^{th}$ frame of image includes: corresponding screen space coordinates of the $m^{th}$ frame of image to screen space coordinates of the $(m+1)^{th}$ frame of image; and when both a pixel in a first screen space corresponding to the $m^{th}$ frame of image and a pixel in a first screen space corresponding to the $(m+1)^{th}$ frame of image are static pixels, reusing the pixel in the first screen space of the $m^{th}$ frame of image to render the first screen space of the $m^{th}$ frame of image; or when both a pixel in a second screen space corresponding to the $m^{th}$ frame of image and a pixel in a second screen space corresponding to the $(m+1)^{th}$ frame of image are dynamic pixel, or when a type of the pixel in the second screen space of the $m^{th}$ frame of image and a type of the pixel in the second screen space of the $(m+1)^{th}$ frame of image are different, rendering the second screen space of the $(m+1)^{th}$ frame of image based on the pixel in the second screen space of the $(m+1)^{th}$ frame of image.

With reference to the second aspect, in some possible implementations, the method further includes: receiving an $(m+n)^{th}$ group of to-be-rendered image data sent by the application, where n>1, and n is an integer; and performing rendering based on the static pixel of the $m^{th}$ frame of image or a static pixel of an $(m+n-1)^{th}$ frame of image, and at least a part of pixel values in the $(m+n)^{th}$ group of image data to generate an $(m+n)^{th}$ frame of image, where the static pixel of the $(m+n-1)^{th}$ frame of image is obtained based on the $(m+n-1)^{th}$ group of image data.

With reference to the first aspect and the second aspect, in some possible implementations, receiving the $m^{th}$ group of to-be-rendered image data sent by the application includes: receiving the $m^{th}$ group of to-be-rendered image data from a server of a first application, where the first application is any one of one or more preset applications.

It may be understood that one or more applications may be preset on the terminal device. For example, the terminal device pre-stores, but is not limited to, an application allowlist to which the image rendering method provided in this application is applied. The application allowlist is not limited to being stored in a form of list. The first application may be any application in the application allowlist. When the first application runs on the terminal device, the terminal device may receive the $m^{th}$ group of image data from the server of the first application.

According to a third aspect, this application provides a terminal device. The terminal device may be configured to implement the method according to the first aspect and any possible implementation of the first aspect, or configured to implement the method according to the second aspect and any possible implementation of the second aspect. The terminal device includes a corresponding module configured to perform the foregoing method. The modules included in the terminal device may be implemented in a software and/or hardware manner.

According to a fourth aspect, this application provides a terminal device. The terminal device includes at least one processor and at least one communication interface. The processor is coupled to the communication interface, and may be configured to execute a program to implement the image rendering method according to the first aspect and any possible implementation of the first aspect, or implement the image rendering method according to the second aspect and any possible implementation of the second aspect.

Optionally, the terminal device further includes a memory, and the processor is coupled to the memory.

According to a fifth aspect, this application provides a chip system. The chip system includes at least one processor, configured to support implementation of the function in the first aspect or any possible implementation of the first aspect; or configured to support implementation of the function in the second aspect and any possible implementation of the second aspect, for example, processing data in the foregoing method.

In a possible design, the chip system further includes a memory. The memory is configured to store program instructions and data. The memory is located inside the processor or outside the processor.

The chip system may include a chip, or may include a chip and another discrete component.

According to a sixth aspect, a readable storage medium is provided. The storage medium stores a program (which may also be referred to as code or an instruction). When the program is run, the method according to the first aspect and any possible implementation of the first aspect is performed, or the method according to the second aspect and any possible implementation of the second aspect is performed.

According to a seventh aspect, a program product is provided. The program product includes a program (which may also be referred to as code or an instruction). When the program is run, the method according to the first aspect and any possible implementation of the first aspect is performed, or the method according to the second aspect and any possible implementation of the second aspect is performed.

It should be understood that the third aspect to the seventh aspect of this application correspond to the technical solution of the first aspect of this application, and beneficial effect achieved by the aspects and corresponding feasible implementations are similar. Details are not described again.

**BRIEF DESCRIPTION OF DRAWINGS**

FIG. 1 is a diagram of a structure of a terminal device to which an image rendering method according to an embodiment of this application is applicable;

FIG. 2 is a block diagram of a structure of software of a terminal device to which an image rendering method according to an embodiment of this application is applicable;

FIG. 3 is a block diagram of another structure of software of a terminal device to which an image rendering method according to an embodiment of this application is applicable;

FIG. 4 is a schematic flowchart of an image rendering method according to an embodiment of this application;

FIG. 5 is a schematic flowchart of triggering, according to an embodiment of this application, execution of an image rendering method according to this application;

FIG. 6 is a diagram of a static/dynamic separation mask (Mask) according to an embodiment of this application;

FIG. 7 is a schematic flowchart of generating a static/dynamic separation mask according to an embodiment of this application;

FIG. 8 is a schematic flowchart of whether to change a shading rate according to an embodiment of this application;

FIG. 9 is a block diagram of a structure of software and hardware of a terminal device to which an image rendering method according to an embodiment of this application is applicable;

FIG. 10 is a schematic flowchart of implementing an image rendering method according to an embodiment of this application in an operating system;

FIG. 11 is a block diagram of another structure of software and hardware of a terminal device to which an image rendering method according to an embodiment of this application is applicable;

FIG. 12 is another schematic flowchart of an image rendering method according to an embodiment of this application;

FIG. 13 is a diagram of data related to an image rendering method according to an embodiment of this application;

FIG. 14 is still another schematic flowchart of an image rendering method according to an embodiment of this application;

FIG. 15 is another diagram of data related to an image rendering method according to an embodiment of this application; and

FIG. 16 is a schematic flowchart of another image rendering method according to an embodiment of this application.

**DESCRIPTION OF EMBODIMENTS**

The following describes technical solutions in this application with reference to accompanying drawings.

First, in embodiments of this application, the terms "include", "having", and any other variant thereof are intended to cover a non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to such an apparatus, system, product, or device.

Second, in this application, the descriptions "when...", "in a case that...", "if", and the like all mean that an apparatus performs corresponding processing in an objective case, but are not intended to limit time. The descriptions do not necessarily mean that the apparatus performs a determining action during implementation, and do not mean any other limitation.

Terms in this application are briefly described below.

1. Static object: A static object is an object moving only with a change of an angle of view.

2. Dynamic object: A dynamic object is an object not only moving with a change of an angle of view, but also moving by a geometry of the dynamic object.

3. Static pixel: A static pixel is a pixel corresponding to a static object.

4. Dynamic pixel: A dynamic pixel is a pixel corresponding to a dynamic object.

5. RGBA: RGBA is a color space of a red (red, R) channel, a green (green, G) channel, a blue (blue, B) channel, and an A channel, where the three channels RGB may be used to determine an actual display color of a pixel, and the A channel may be used to determine transparency of the pixel.

6. Screen space: In the rendering field, a screen space may be a pixel coordinate space of a two-dimensional (2-dimension, 2D) image generated during three-dimensional (3-dimension, 3D) rendering, is a 3D projection result of a geometry in a camera space, and is formed by a two-dimensional pixel array, where each pixel has a color channel such as RGBA.

7. Main scene: Game image rendering and drawing may be classified into game main scene drawing and game user interface (user interface, UI) drawing, where the game main scene may include a game terrain, vegetation, building, character, special effect, and the like.

8. Open graphics library (open graphics library, OpenGL): An open graphics library, also referred to as an "open graphics library", is a cross-language and cross-platform application programming interface (application programming interface, API) for rendering 2D and 3D vector graphics.

9. Vulkan: Vulkan is a cross-platform 2D and 3D drawing API.

With improvement in a screen resolution and refresh rate, requirements for shading computation are increasing sharply.

In a current image rendering method, shading computation has high power consumption. In the field of rendering at a mobile end, overheating, lagging, and the like occur at the mobile end due to limitations of a computing capability, bandwidth, and heat dissipation of the mobile end, leading to a frequency limitation, a frame limitation, and the like in some applications (for example, game applications). As a result, user experience is affected.

To resolve the foregoing problem, this application provides an image rendering method and a related apparatus. N (N≥2) frames of images are used as a group, and a first frame of image in the N frames of images is obtained based on a currently known rendering procedure, that is, a first frame of image in the N frames of images may be obtained by performing rendering based on all pixel values in image data of the first frame of image. At least one frame of image in another image in the N frames of images except the first frame of image may be obtained by performing rendering based on a static pixel of a previous frame of image of the image in the group of images, and at least a part of pixel values in image data of the image. In this way, a part of pixel values in another image in each group of images is reused for performing rendering to generate at least one frame of image in the group. This helps reduce power consumption of shading computation at the mobile end, reduce occurrence of overheating, lagging, and the like, and further improve user experience.

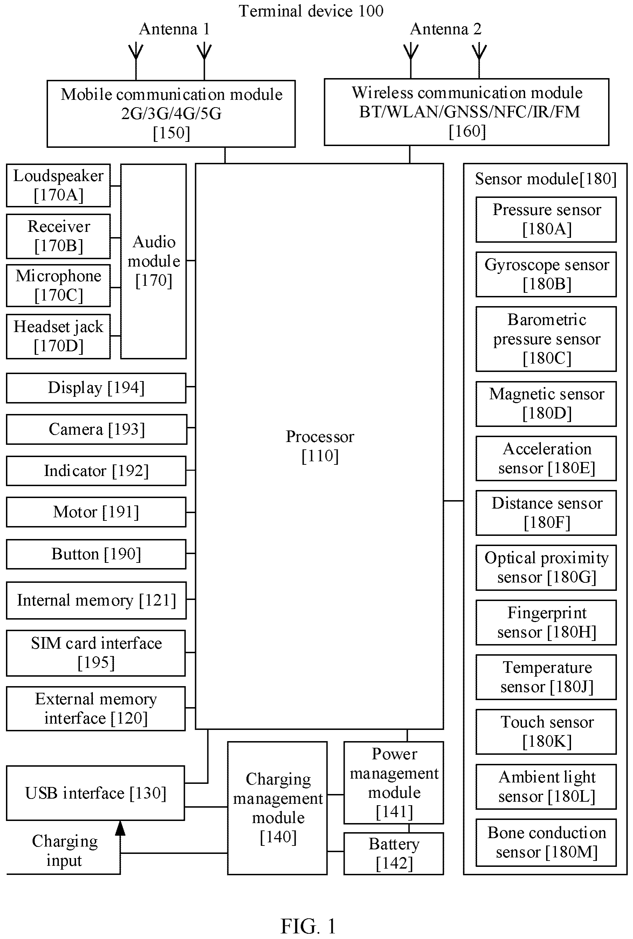

Before the image rendering method provided in embodiments of this application is described in detail, an example of a terminal device to which embodiments of this application are applicable is described below with reference to FIG. 1, FIG. 2, and FIG. 3.

The image rendering method provided in embodiments of this application is applied to a terminal device at a mobile end, for example, including but not limited to a smartphone, a tablet computer, a wearable device, an in-vehicle device, a notebook computer, an ultra-mobile personal computer (ultra-mobile personal computer, UMPC), a netbook, a virtual reality (virtual reality, VR) device (like VR glasses), an augmented reality (augmented reality, AR) device, and a projector. A specific type of the device is not limited in embodiments of this application.

In addition, the method in embodiments of this application may support operating systems such as an Android operating system (Android operating system, Android OS), a Harmony operating system (Harmony OS), an open Harmony operating system (OpenHarmony OS), iOS, a window operating system (Windows OS), and a lightweight operating system (like LiteOS). This is not limited in embodiments of this application.

FIG. 1 is a diagram of a structure of a terminal device to which an image rendering method according to an embodiment of this application is applicable.

For example, FIG. 1 is a diagram of a structure of a terminal device 100. As shown in FIG. 1, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent components, or may be integrated into one or more processors.

The application processor outputs a sound signal via the audio module 170 (for example, the loudspeaker 170A), or displays an image or a video on the display 194.

The controller may be a nerve centre and a command center of the terminal device 100. The controller may generate an operation control signal based on an instruction operation code and a time sequence signal, to complete control of instruction reading and instruction execution.

A memory may be disposed in the processor 110, and is configured to store an instruction and data. In some embodiments, the memory in the processor 110 is a cache. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

The processor 110 may perform different operations by executing the instruction, to implement different functions. For example, the instruction may be an instruction pre-stored in the memory before the device is delivered from a factory, or may be an instruction read from a new application after a user installs the application in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal device 100, or may be configured to perform data transmission between the terminal device 100 and a peripheral device, or may be configured to connect to a headset for playing audio through the headset. The interface may be configured to connect to another device, for example, an augmented reality (augmented reality, AR) device. It may be understood that an interface connection relationship between the modules shown in this application is merely an example for description, and does not constitute a limitation on the structure of the terminal device 100. In some other embodiments, the terminal device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. The charging management module 140 may further supply power to the terminal device 100 via the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be reused, to improve antenna utilization.

The mobile communication module 150 may provide a wireless communication solution that is applied to the terminal device 100 and that includes 2G, 3G, 4G, 5G, and the like.

The wireless communication module 160 may provide a wireless communication solution that is applied to the terminal device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology.

The terminal device 100 may implement a display function through the GPU, the display 194, the application processor, and the like. The GPU is a microprocessor for image processing, and is connected to the display 194 and the application processor. The GPU is configured to perform mathematical and geometric calculations, and is configured to render graphics. The processor 110 may include one or more GPUs, which execute program instructions to generate or change display information.

The display 194, which may also be referred to as a screen, may be configured to display an image, a video, and the like. It should be understood that the display 194 may further include more components, for example, a backlight board or a drive circuit. The backlight board may be configured to provide a light source, and a display panel emits light based on the light source provided by the backlight board. The drive circuit may be configured to control a liquid crystal of a liquid crystal layer to transmit light or not to transmit light.

The terminal device 100 may implement a photographing function by using the ISP, the camera 193, the video codec, the GPU, the display 194, the application processor, and the like.

The external memory interface 120 may be configured to connect to an external storage card, for example, a micro SD card, to extend a storage capability of the terminal device 100. The external memory card communicates with the processor 110 through the external memory interface 120, to implement a data storage function, for example, store files such as music and a video into the external storage card.

The internal memory 121 may be configured to store device-executable program code. The executable program code includes an instruction. The processor 110 runs the instruction stored in the internal memory 121, to perform various function applications and data processing of the terminal device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the terminal device 100. In addition, the internal memory 121 may include a high-speed random access memory, or may include a nonvolatile memory, for example, at least one magnetic disk storage device and a flash memory.

The terminal device 100 may implement an audio function, for example, music playing and recording, by using the audio module 170, for example, the loudspeaker 170A, the receiver 170B, the microphone 170C, the headset jack 170D, and the application processor.

It may be understood that the structure shown in this application does not constitute a specific limitation on the terminal device 100. In some other embodiments, the terminal device 100 may include more or fewer components than those shown in the figure, or combine some components, or split some components, or have different component arrangements. The components shown in the figure may be implemented by hardware, software, or a combination of software and hardware.

A software system of the terminal device 100 may use a layered architecture, an event-driven architecture, a microkernel architecture, a microservice architecture, or a cloud architecture. The layered architecture classifies the software system of the terminal device 100 as several layers, each layer has a clear role and division of labor, and the layers communicate with each other through a software interface. In this application, an operating system like OpenHarmony OS and Android in a layered architecture is used as an example to describe an example of a software structure of the terminal device 100, but a type of an operating system of the terminal device used in the image rendering method provided in embodiments of this application should not be limited.

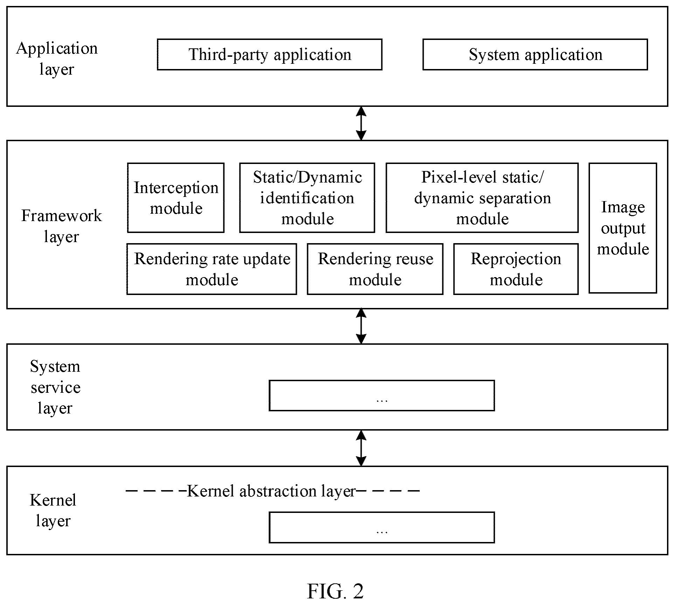

FIG. 2 is a block diagram of a structure of software of a terminal device to which an image rendering method according to an embodiment of this application is applicable.

As shown in FIG. 2, in some embodiments, the operating system is classified as four layers, which are respectively an application layer, a framework layer, a system service layer, and a kernel layer from top to bottom. In some embodiments, the terminal device 100 further includes hardware such as a GPU, a central processing unit (central processing unit, CPU), and a display.

The application layer may include a series of applications. As shown in FIG. 2, the application layer may include a system application and a third-party application. The system application may be understood as some built-in applications of the system, for example, applications such as Camera, Gallery, Calendar, Phone, Maps, Bluetooth, Videos, and Music. The third-party application may be understood as a non-system application, and may be an application downloaded and installed from an application store, an application market, or the like, for example, some game applications.

As not shown in FIG. 2, the framework layer may include a UI framework, a user program framework, and a component framework. The framework layer provides the user program framework and component framework with multi languages such as C, C++, and JavaScript (JS) for an application on the operating system, and an API open to various software and hardware services; and provides a UI framework with multi languages such as C, C++, and JS for a device. APIs supported by different devices are related to a degree of componentization of the system.

In embodiments of this application, as shown in FIG. 2, the framework layer may further include an interception module, a static/dynamic identification module, a pixel-level static/dynamic separation module, a rendering rate update module, a rendering reuse module, a reprojection module, an image output module, and the like.

The interception module may be configured to intercept a rendering command and image data of an image. In other words, at the framework layer of the operating system of the terminal device in this application, a graphics API call may be intercepted, and the related rendering command and image data are buffered. The static/dynamic identification module may be configured to identify, based on a feature of the rendering command of the image, whether the rendering command is a static rendering command or a dynamic rendering command, to determine a static object and a dynamic object in the image. Based on the static object and the dynamic object in the image that are determined by the static/dynamic identification module, the pixel-level static/dynamic separation module may determine and distinguish between a static pixel and a dynamic pixel of the image, that is, may be understood as separating a static pixel from a dynamic pixel of the image. The rendering rate update module may be configured to update a shading rate during rendering, for example, adjust a rendering rate by using a variable rate shading (variable rate shading, VRS) mechanism, and the updates may include but are not limited to reducing a shading rate of the static object and maintaining an original shading rate of the dynamic object. The rendering reuse module may be configured to reuse, in a process of rendering an $m^{th}$ frame of image, a part of pixels in a previous frame of image of the $m^{th}$ frame of image. The reprojection module may be configured to one-to-one correspond the $m^{th}$ frame of image to screen space coordinates of the previous frame of image of the $m^{th}$ frame of image. The image output module may output an image generated through rendering.

The system service layer is a core capability set of the operating system, and provides various system services for an application via the framework layer. As not shown in FIG. 2, the system service layer may include a system basic capability subsystem set, a basic software service subsystem set, an enhanced software service subsystem set, and a hardware service subsystem set.

The system basic capability subsystem set may include subsystems such as a distributed soft bus and a distributed data management subsystem. The system basic capability subsystem set may provide a basic capability for operations such as running, scheduling, and migration of a distributed application on a plurality of devices.

The basic software service subsystem set may include subsystems such as an event notification, phone, and multimedia, and provides a common and universal software service.

The enhanced software service subsystem set may include subsystems such as a dedicated service of Huawei Vision, a dedicated service of wearables, and a dedicated service of the internet of things (internet of things, IoT), and may provide differentiated capability enhanced software services for different devices.

The hardware service subsystem set may include subsystems such as a location service, biometric feature recognition, a wearable dedicated hardware service, and an IoT dedicated hardware service, and may provide a hardware service.

It should be noted that, based on deployment environments of different device forms, the basic software service subsystem set, the enhanced software service subsystem set, and the hardware service subsystem set may be tailored in a subsystem granularity, and each subsystem may be tailored in a function granularity. This is not limited in embodiments of this application.

As not shown in FIG. 2, the kernel layer may include a kernel subsystem and a drive subsystem. The operating system may adopt a multi-kernel design. Based on the kernel subsystem, the operating system supports selection of an appropriate OS kernel for different resource-limited devices. A kernel abstraction layer (kernel abstraction layer, KAL) shields differences between a plurality of kernels and provides a basic kernel capability for an upper layer, where the basic kernel capability includes process/thread management, memory management, file system management, network management, peripheral management, and the like. A drive framework in the drive subsystem is a basis of a hardware ecosystem of the operating system, and may provide a unified peripheral access capability and a drive development and management framework.

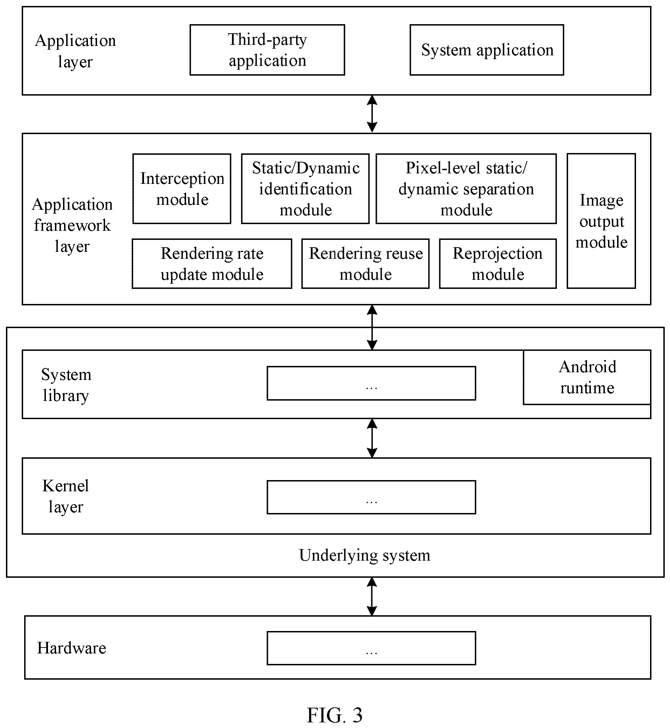

FIG. 3 is a block diagram of another structure of software of a terminal device to which an image rendering method according to an embodiment of this application is applicable.

As shown in FIG. 3, in some embodiments, an Android operating system is classified as an application layer, an application framework layer, Android runtime (Android runtime) and a system library, and a kernel layer from top to bottom.

In some embodiments, the terminal device 100 further includes hardware such as a GPU, a CPU, and a display.

The application layer may include a series of applications. As shown in FIG. 3, the application layer may include a system application and a third-party application. The system application may be understood as some built-in applications of the system, for example, applications such as Camera, Gallery, Calendar, Phone, Maps, Bluetooth, Videos, and Music. The third-party application may be understood as a non-system application, and may be an application downloaded and installed from an application store or the like.

The application framework layer provides an API and a programming framework for an application at the application layer. The application framework layer includes some predefined functions. As shown in FIG. 3, the application framework layer may include an interception module, a static/dynamic identification module, a pixel-level static/dynamic separation module, a rendering rate update module, a rendering reuse module, a reprojection module, an image output module, and the like. For detailed descriptions of the interception module, the static/dynamic identification module, the pixel-level static/dynamic separation module, the rendering rate update module, the rendering reuse module, the reprojection module, the image output module, refer to related content in FIG. 2. For brevity, details are not described herein again.

As not shown in FIG. 3, the Android runtime may include a kernel library and a virtual machine. The Android runtime is responsible for scheduling and management of the Android operating system.

The kernel library may include two parts: a function that needs to be invoked in Java language, and a kernel library of the Android operating system.

The application layer and the application framework layer run on the virtual machine. The virtual machine executes Java files of the application layer and the application framework layer as binary files. The virtual machine is used to implement functions such as object lifecycle management, stack management, thread management, security and exception management, and garbage collection.

As not shown in FIG. 3, the system library may include a plurality of function modules, such as a status monitoring service, a surface manager (surface manager), media libraries (media libraries), a three-dimensional graphics processing library (for example, OpenGL ES), and a two-dimensional (2 dimensions, 2D) graphics engine (for example, SGL).

The kernel layer is a layer between hardware and software. As not shown in FIG. 3, the kernel layer may include a power management service, a sensor service (which may also be referred to as a sensor driver), a display service (which may also be referred to as a display driver), a camera driver, an audio driver, and the like. This is not limited in embodiments of this application.

It should be understood that FIG. 1, FIG. 2, and FIG. 3 are merely examples, and should not impose any limitation on embodiments of this application.

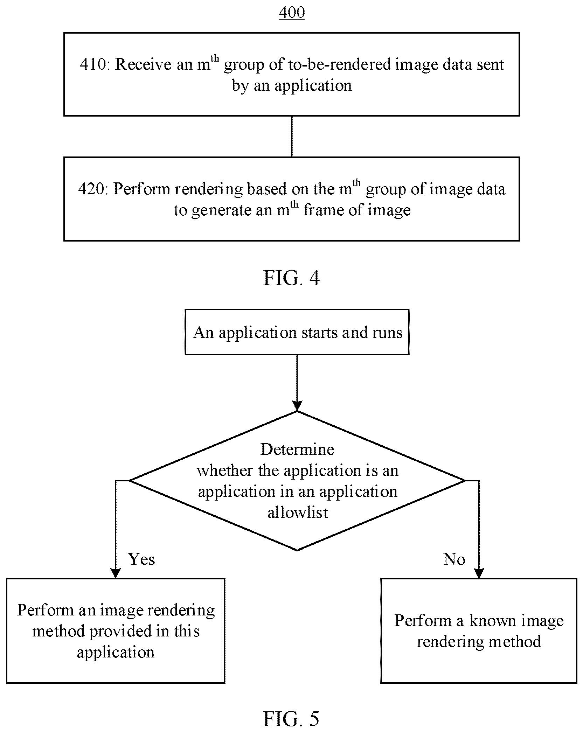

FIG. 4 is a schematic flowchart of an image rendering method according to an embodiment of this application.

As shown in FIG. 4, the method 400 may include step 410 and step 420. The steps of the method 400 may be performed by a terminal device at a mobile end (which may be briefly referred to as a mobile terminal), or the method 400 may be performed by a component (like a chip or a chip system) configured in the terminal device, or may be implemented by a logical module or software that can implement all or some functions of the terminal device. This is not limited in embodiments of this application. The terminal device may have the structure shown in FIG. 1, FIG. 2, or FIG. 3. This is not limited in embodiments of this application. The following describes the steps in FIG. 4 in detail.

In step 410, an $m^{th}$ group of to-be-rendered image data sent by an application is received.

The $m^{th}$ group of image data includes a plurality of pixel values for generating an image, $m \geq 1$, and m is an integer.

The terminal device may receive the $m^{th}$ group of to-be-rendered image data sent by the application.

In a possible implementation, receiving the $m^{th}$ group of to-be-rendered image data sent by the application includes: receiving the $m^{th}$ group of to-be-rendered image data from a first application, where the first application is any one of one or more preset applications.

It may be understood that one or more applications may be preset on the terminal device. This, for example, includes but is not limited to that the terminal device pre-stores an application allowlist to which the image rendering method provided in this application is applied. The application allowlist is not limited to being stored in a form of list. The first application may be any application in the application allowlist. In embodiments of this application, the first application may be a system application, or may be a third-party application. The first application may include but is not limited to a game application, a VR application, an AR application, or the like.

The terminal device may obtain, based on an installation path and/or a resource path of the first application, the $m^{th}$ group of to-be-rendered image data from the first application. In a possible implementation, by way of example and not limitation, when the first application runs on the terminal device, the terminal device may receive the $m^{th}$ group of image data from a server of the first application.

FIG. 5 is a schematic flowchart of triggering, according to this embodiment of this application, execution of the image rendering method according to this application.

As shown in FIG. 5, when an application on the terminal device starts and runs, the terminal device may determine whether the application is an application in the application allowlist. When the application is an application in the foregoing pre-stored application allowlist to which the image rendering method provided in this application is applied, the terminal device may perform the image rendering method provided in this application; or when the application is not an application in the foregoing pre-stored application allowlist to which the image rendering method provided in this application is applied, the terminal device may perform a known image rendering method.

In step 420, rendering is performed based on the $m^{th}$ group of image data to generate an $m^{th}$ frame of image.

When m mod N=1, the $m^{th}$ frame of image is obtained by performing rendering based on all the pixel values in the $m^{th}$ group of image data; or when m mod N≠1, the $m^{th}$ frame of image is obtained by performing rendering based on a static pixel of an $i^{th}$ frame of image and at least a part of pixel values in the $m^{th}$ group of image data. The static pixel of the $i^{th}$ frame of image is obtained based on an $i^{th}$ group of image data. N is a preset integer, N≥2, and $\left(\left\lceil\frac{m}{N}\right\rceil-1\right)\times N+1\leq i\leq m-1$.

It may be understood that "mod" is a modulo operator for finding a remainder of division between two numbers, and "$\left\lceil\frac{m}{N}\right\rceil$" means rounding up (m/N).

When receiving the $m^{th}$ group of image data from the first application, the terminal device may perform rendering based on the m groups of image data to generate the $m^{th}$ frame of image.

When m mod N=1, the terminal device may perform the currently known image rendering method based on the $m^{th}$ group of image data. To be specific, the terminal device may perform rendering based on all the pixel values in the $m^{th}$ group of image data to obtain the $m^{th}$ frame of image. When m mod N≠1, the terminal device may perform, based on the $m^{th}$ group of image data, the image rendering method provided in embodiments of this application. To be specific, the terminal device may perform rendering based on the static pixel of the $i^{th}$ frame of image and the at least a part of pixel values in the $m^{th}$ group of image data to obtain the $m^{th}$ frame of image, where N is a preset positive integer, and $\left(\left\lceil\frac{m}{N}\right\rceil-1\right)\times N+1\leq i\leq m-1$. In other words, a part of pixel values of a previous frame of image of the $m^{th}$ frame is reused for performing rendering to generate the $m^{th}$ frame. This helps reduce power consumption of shading computation at the mobile end, reduce occurrence of overheating, lagging, and the like, and further improve user experience.

For example, N=2 (which may be understood as that every two frames of images form a group). When m=5, 5 mod 2=1, and the terminal device may perform rendering based on all pixel values in a fifth group of image data to obtain a fifth frame of image; or when m=6, 6 mod 2=0≠1, i=5 (obtained based on $\left(\left\lceil\frac{6}{2}\right\rceil-1\right)\times 2+1\leq i\leq 6-1$), and the terminal device may perform rendering based on a static pixel of the fifth frame of image and at least a part of pixel values in a sixth group of image data to obtain a sixth frame of image.

It may be understood that, when N=2, it may be understood that a $(2x-1)^{th}$ frame of image may be obtained by performing rendering based on all pixel values in image data of the $(2x-1)^{th}$ frame of image; and a $(2x)^{th}$ frame of image may be obtained by performing rendering based on a static pixel of the $(2x-1)^{th}$ frame of image and at least a part of pixel values in image data of the $(2x)^{th}$ frame of image, where x is a positive integer.

For another example, N=3 (which may be understood as that every three frames of images form a group). When m=4, 4 mod 3=1, and the terminal device may perform rendering based on all pixel values in a fourth group of image data to obtain a fourth frame of image; or when m=5, 5 mod 3=2≠1, i=4 (obtained based on $\left(\left\lceil\frac{5}{3}\right\rceil-1\right)\times 3+1\leq i\leq 5-1$), and the terminal device may perform rendering based on a static pixel of the fourth frame of image and at least a part of pixel values in a fifth group of image data to obtain a fifth frame of image; or when m=6, 6 mod 3=0≠1, i=4 or 5 (obtained based on $\left(\left\lceil\frac{6}{3}\right\rceil-1\right)\times 3+1\leq i\leq 6-1$), and the terminal device may perform rendering based on the static pixel of the fourth frame of image or a static pixel of the fifth frame of image and at least a part of pixel values in a sixth group of image data to obtain a sixth frame of image.

It may be understood that, in an actual application process, every N frames of images form a group. In the N frames of images, at least one frame of image may be obtained by performing rendering based on a static pixel of any previous frame of image of the at least one frame of image in the group and at least a part of pixel values in image data of the at least one frame of image. By way of example and not limitation, N=3. In a second group of images (including the fourth frame of image, the fifth frame of image, and the sixth frame of image), the fourth frame of image may be obtained by performing rendering based on all the pixel values in the fourth group of image data, the fifth frame of image may be obtained by performing rendering based on all the pixel values in the fifth group of image data, and the sixth frame of image may be obtained by performing rendering based on the static pixel of the fifth frame of image and the at least a part of pixel values in the sixth group of image data. For another example, the fourth frame of image may be obtained by performing rendering based on all the pixel values in the fourth group of image data, the fifth frame of image may be obtained by performing rendering based on the static pixel of the fourth frame of image and the at least a part of pixel values in the fifth group of image data, and the sixth frame of image may be obtained by performing rendering based on all pixel values in the sixth group of image data.

In a possible implementation, the method 400 further includes: intercepting one or more rendering commands corresponding to the m$^{th}$ frame of image.

It should be understood that the application needs to send the rendering command to a GPU or a CPU. The action of intercepting may be intercepting the rendering command before the rendering command reaches the GPU or the CPU. Because the rendering command needs to be transferred via an operating system, in technical implementation, the application may send the rendering command to the operating system, where the operating system performs other processing on the rendering command, and then send the rendering command to the GPU or the CPU via the operating system.

It may be understood that each frame of image may include one or more objects (static objects or dynamic objects), and each rendering command is used to render one object. Therefore, each frame of image may correspond to one or more rendering commands.

The terminal device pre-stores the application allowlist to which the image rendering method provided in this application is applied. After the first application in the application allowlist starts running on the terminal device, the terminal device may intercept, via the interception module in FIG. 2 or FIG. 3, the one or more rendering commands corresponding to the m$^{th}$ frame of image and the m$^{th}$ group of image data corresponding to the m$^{th}$ frame of image.

In a possible implementation, before performing rendering to generate the m$^{th}$ frame of image, the method 400 further includes: determining, based on feature or features of the one or more rendering commands corresponding to the m$^{th}$ frame of image, a static pixel and a dynamic pixel of the m$^{th}$ frame of image.

After intercepting the one or more rendering commands corresponding to the m$^{th}$ frame of image, the terminal device may determine, based on the feature or features of the one or more rendering commands corresponding to the m$^{th}$ frame of image, the static pixel and the dynamic pixel of the m$^{th}$ frame of image via the static/dynamic identification module and the pixel-level static/dynamic separation module in FIG. 2 or FIG. 3.

In a possible implementation, the feature of the rendering command includes one or more of the following: a program alias, a program variable name, or a program index buffer name.

It may be understood that the rendering command may include one or more attributes. For example, a program alias, a program variable name, or a program index buffer name may be a name of an attribute included in a rendering command, a name of each attribute may correspond to a corresponding attribute value, and a feature of a rendering command may include a name of an attribute included in the rendering command and an attribute value corresponding to the name of the attribute.

This application provides Implementation A and Implementation B, to implement "determining the static pixel and the dynamic pixel of the m$^{th}$ frame of image based on the feature or features of the one or more rendering commands corresponding to the m$^{th}$ frame of image". The following separately describes Implementation A and Implementation B in detail.

Implementation A: Determining, based on the feature or features of the one or more rendering commands corresponding to the m$^{th}$ frame of image, the static pixel and the dynamic pixel of the m$^{th}$ frame of image includes: determining, based on a feature of each of the one or more rendering commands, a static object and a dynamic object that are included in the m$^{th}$ frame of image; determining the static pixel based on the static object; and determining the dynamic pixel based on the dynamic object.

Attribute values of some attributes may be preset (including but not limited to setting or limitation in a form of list). When a rendering command includes any attribute value of these preset attribute values, the terminal device may determine that the rendering command is a dynamic rendering command, that is, in the m$^{th}$ frame of image, an object rendered by the rendering command is a dynamic object; or when a rendering command does not include all attribute values of these preset attribute values, the terminal device may determine that the rendering command is a static rendering command, that is, in the m$^{th}$ frame of image, an object rendered by the rendering command is a static object.

By way of example and not limitation, the one or more rendering commands corresponding to the m$^{th}$ frame of image include a rendering command 1, a rendering command 2, a rendering command 3, and the like. For example, if an attribute value of an attribute program index buffer name of the rendering command 1 is "character index buffer (used to drive movement of a character or a bone motion of a character)", the terminal device may determine, based on the feature of the rendering command 1, that the rendering command 1 is a dynamic rendering command, that is, in the m$^{th}$ frame of image, an object rendered by the rendering command 1 is a dynamic object. For another example, if an attribute value of an attribute program variable name of the rendering command 2 is "character colour (used to color a character)", the terminal device may determine, based on the feature of the rendering command 2, that the rendering command 2 is a dynamic rendering command, that is, in the m$^{th}$ frame of image, an object rendered by the rendering command 2 is a dynamic object.

To be specific, when intercepting the one or more rendering commands corresponding to the m$^{th}$ frame of image, the terminal device may analyze each rendering command based on the preset attribute values of these attributes via the static/dynamic identification module shown in FIG. 2 or FIG. 3, and determine whether an attribute value of the rendering command includes any one of the preset attribute values of these attributes. If the attribute value of the rendering command includes any one of the preset attribute values of these attributes, the terminal device determines that, in the $m^{th}$ frame of image, an object rendered by the rendering command is the dynamic object. Otherwise, the terminal device determines that, in the $m^{th}$ frame of image, an object rendered by the rendering command is the static object.

After determining the static object and the dynamic object that are included in the $m^{th}$ frame of image, the terminal device may determine the static pixel based on the static object, and determine the dynamic pixel based on the dynamic object. For example, the terminal device may determine, based on the pixel-level static/dynamic separation module shown in FIG. 2 or FIG. 3, a pixel region corresponding to the static object included in the $m^{th}$ frame of image as a region of the static pixels, and identify these static pixels with a first identifier value; and determine a pixel region corresponding to the dynamic object included in the $m^{th}$ frame of image as a region of the dynamic pixels, and identify these dynamic pixels with a second identifier value, to distinguish the static pixels from the dynamic pixels.

In a possible implementation, after determining the static pixel and the dynamic pixel of the $m^{th}$ frame of image, the method 400 further includes: marking the static pixel and the dynamic pixel based on an A channel or a stencil buffer, where both the static pixel and the dynamic pixel include an RGBA channel.

By way of example and not limitation, after the static pixel and the static pixel of the $m^{th}$ frame of image are determined, the first identifier value for identifying the static pixel and the second identifier value for identifying the dynamic pixel may be written into the stencil buffer or the A channel in RGBA, to generate a static/dynamic separation mask (Mask), and the mask is stored for subsequent computation and analysis based on the mask.

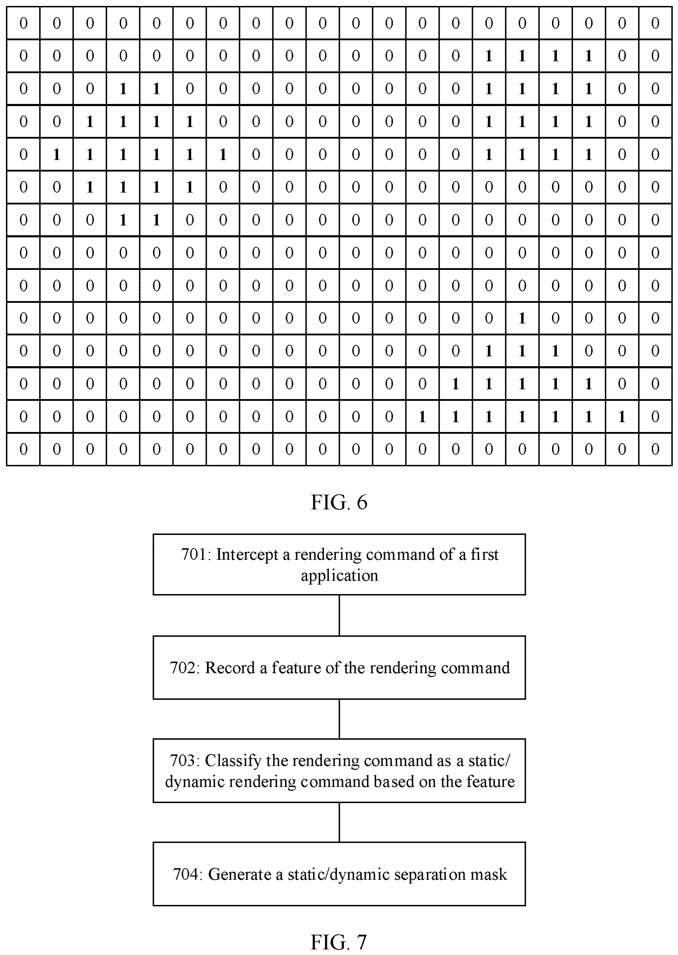

FIG. 6 is a diagram of the static/dynamic separation mask according to the embodiment of this application.

By way of example and not limitation, "0" is used as an example of the first identifier value, and "1" is used as an example of the second identifier value. As shown in FIG. 6, a pixel whose value is "0" is a static pixel, and a pixel whose value is "1" is a dynamic pixel.

To better understand Implementation A, the following describes generation of the static/dynamic separation mask again with reference to FIG. 7.

FIG. 7 is a schematic flowchart of generating the static/dynamic separation mask according to this embodiment of this application.

Step 701: Intercept a rendering command of the first application.

The first application is any one of one or more preset applications. The terminal device may intercept the rendering command of the first application. Each frame of image may include one or more objects (static objects or dynamic objects), and each rendering command is used to render one object. Therefore, each frame of image may correspond to one or more rendering commands. For example, the terminal device may intercept the one or more rendering commands corresponding to the $m^{th}$ frame of image.

Step 702: Record a feature of the rendering command.

The terminal device may record the feature of each of the one or more rendering commands corresponding to the $m^{th}$ frame of image. The feature of the rendering command includes one or more of the following: a program alias, a program variable name, or a program index buffer name.

Step 703: Classify the rendering command as a static/dynamic rendering command based on the feature.

The terminal device may classify, based on the feature of each of the one or more rendering commands corresponding to the $m^{th}$ frame of image, the one or more rendering commands corresponding to the $m^{th}$ frame of image as the static/dynamic rendering command, to be specific, determine that each of the one or more rendering commands corresponding to the $m^{th}$ frame of image is a static rendering command or a dynamic rendering command.

Step 704: Generate the static/dynamic separation mask.

After whether each of the one or more rendering commands corresponding to the $m^{th}$ frame of image is the static rendering command or the dynamic rendering command is determined, the terminal device knows which objects in the $m^{th}$ frame of image are the static objects and which objects are the dynamic objects; therefore determines the static pixels based on the static objects and determines the dynamic pixels based on the dynamic objects; and further may generate the static/dynamic separation mask based on the static pixels and the dynamic pixels.

Implementation B: Determining, based on the feature or features of the one or more rendering commands corresponding to the $m^{th}$ frame of image, the static pixel and the dynamic pixel of the $m^{th}$ frame of image includes: determining, based on a feature of each of the one or more rendering commands, a static object and a dynamic object that are included in the $m^{th}$ frame of image, to obtain a motion vector set of the $m^{th}$ frame of image; and determining, based on the motion vector set, the static pixel and the dynamic pixel, where a value of a motion vector corresponding to the static object is different from a value of a motion vector corresponding to the dynamic object.

In Implementation B, when intercepting the one or more rendering commands corresponding to the $m^{th}$ frame of image, the terminal device may also analyze each rendering command based on the preset attribute values of the attributes via the static/dynamic identification module shown in FIG. 2 or FIG. 3, and determine whether an attribute value of the rendering command includes any one of the preset attribute values of the attributes. When the attribute value of the rendering command includes any one of the preset attribute values of the attributes, the terminal device determines that, in the $m^{th}$ frame of image, an object rendered by the rendering command is the dynamic object. Otherwise, the terminal device determines that, in the $m^{th}$ frame of image, an object rendered by the rendering command is the static object. For detailed descriptions of "determining, based on the feature or features of the one or more rendering commands corresponding to the $m^{th}$ frame of image, the static object and the dynamic object that are included in the $m^{th}$ frame of image", refer to related descriptions in the foregoing Implementation A. For brevity, details are not described herein again.

After determining the static object and the dynamic object that are included in the $m^{th}$ frame of image, the terminal device may obtain the motion vector set of the $m^{th}$ frame of image based on the static object and the dynamic object. In the motion vector set of the $m^{th}$ frame of image, the value of the motion vector corresponding to the static object is different from the value of the motion vector corresponding to the dynamic object. By way of example and not limitation, for example, the value of the motion vector corresponding to the static object is zero, and the value of the motion vector corresponding to the dynamic object is non-zero. Therefore, the terminal device may determine, based on the motion vector set of the $m^{th}$ frame of image, the static pixel corresponding to the static object and the dynamic pixel corresponding to the dynamic object.

In a possible implementation, when m mod N≠1, and after determining the static object included in the $m^{th}$ frame of image, the method 400 further includes: reducing a shading rate of the static object in the $m^{th}$ frame of image, where rendering of the $m^{th}$ frame of image is based on an updated shading rate.

When m mod N≠1, and after determining the static object included in the $m^{th}$ frame of image, the terminal device may update, via the rendering rate update module in FIG. 2 or FIG. 3, a shading rate used when the $m^{th}$ frame of image is rendered. For example, the terminal device may reduce the shading rate of the static object in the $m^{th}$ frame of image, and may maintain an original shading rate of the dynamic object. This is not limited in embodiments of this application. Reducing the shading rate of the static object can further reduce power consumption of shading computation at the mobile end, reduce occurrence of overheating, lagging, and the like, and improve user experience.

It may be understood that, when m mod N=1, the terminal device does not need to use the rendering rate update module in FIG. 2 or FIG. 3 to update the shading rate when rendering the $m^{th}$ frame of image, and the terminal device only needs to render the $m^{th}$ frame of image based on a currently known image rendering method.

For example, N=2 is used as an example; and when m is 2x, after determining the static object and the dynamic object that are included in the $m^{th}$ frame of image, the terminal device may reduce the shading rate of the static object in the $m^{th}$ frame of image, and maintain the shading rate of the dynamic object in the $m^{th}$ frame of image; or when m is 2x-1, the terminal device may render the $m^{th}$ frame of image based on the currently known image rendering method.

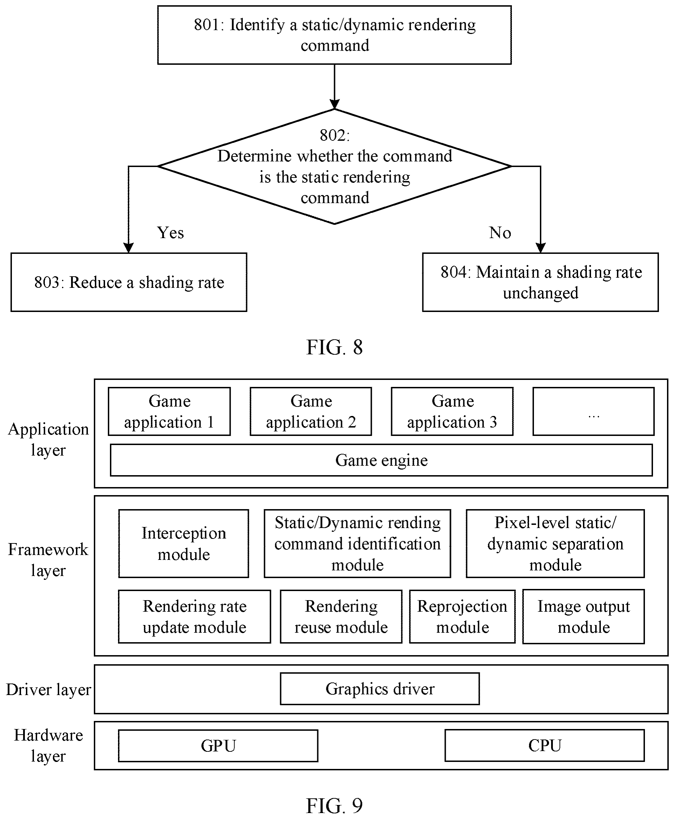

FIG. 8 is a schematic flowchart of whether to update the shading rate according to this embodiment of this application.

Step 801: Identify the static/dynamic rendering command.

When m mod N≠1, the terminal device may perform static/dynamic rendering command identification on each of the one or more rendering commands corresponding to the $m^{th}$ frame of image. For ease of description, in this embodiment of this application, any one of the one or more rendering commands corresponding to the $m^{th}$ frame of image is denoted as a "first rendering command". The terminal device may perform static/dynamic rendering command identification on the first rendering command based on a feature of the first rendering command, to be specific, determine whether the first rendering command is the static rendering command or the dynamic rendering command. The first rendering command is the static rendering command, that is, in the $m^{th}$ frame of image, an object rendered by the rendering command is the static object. The first rendering command is the dynamic rendering command, that is, in the $m^{th}$ frame of image, an object rendered by the rendering command is the dynamic object.

Step 802: Determine whether the command is the static rendering command.

After performing static/dynamic rendering command identification on the first command, the terminal device may determine whether the first rendering command is the static rendering command. When the first rendering command is the static rendering command, the terminal device may perform step 703; or when the first rendering command is the dynamic rendering command, the terminal device may perform step 804.

Step 803: Reduce the shading rate.

When the first rendering command is the static rendering command, the terminal device may reduce the shading rate of the static object rendered by the first rendering command.

Step 804: Maintain the shading rate unchanged.

When the first rendering command is the dynamic rendering command, the terminal device may maintain the shading rate of the dynamic object rendered by the first rendering command unchanged.

Table 1 is a reference table of a plurality of shading rates provided in this embodiment of this application.

Table 1

| Number | Shading rate |
|---|---|
| 1 | 1×1 |
| 2 | 1×2 |

(continued)

| Number | Shading rate |
|--------|--------------|
| 3 | $2\times1$ |
| 4 | $2\times2$ |
| 5 | $2\times4$ |
| 6 | $4\times2$ |
| 7 | $4\times4$ |

In the plurality of shading rates shown in Table 1, the shading rate $1\times1$ corresponding to the number 1 is the largest, and the shading rate $4\times4$ corresponding to the number 7 is the smallest. For example, the shading rate of the static object rendered by the first rendering command is the shading rate $1\times2$ corresponding to the number 2. When the terminal device determines that the first rendering command is the static rendering command, the terminal device may reduce the shading rate of the static object rendered by the first rendering command, that is, the shading rate $1\times2$ corresponding to the number 2 to the shading rate corresponding to any one of the number 3 to the number 7.

It may be understood that, in an actual application scenario, the shading rate may include but are not limited to the plurality of shading rates shown in Table 1.

In a possible implementation, when m mod N$\neq$1, performing rendering based on the $m^{th}$ group of image data to generate the $m^{th}$ frame of image includes: corresponding screen space coordinates of the $i^{th}$ frame of image to screen space coordinates of the $m^{th}$ frame of image; and when both a pixel in a first screen space corresponding to the $i^{th}$ frame of image and a pixel in a first screen space corresponding to the $m^{th}$ frame of image are static pixels, reusing the pixel in the first screen space of the $i^{th}$ frame of image to render the first screen space of the $m^{th}$ frame of image; or when both a pixel in a second screen space corresponding to the $i^{th}$ frame of image and a pixel in a second screen space corresponding to the $m^{th}$ frame of image are dynamic pixels, or when a type of the pixel in the second screen space of the $i^{th}$ frame of image and a type of the pixel in the second screen space of the $m^{th}$ frame of image are different, rendering the second screen space of the $m^{th}$ frame of image based on the pixel in the second screen space of the $m^{th}$ frame of image.

The terminal device may one-to-one correspond the screen space coordinates of the $i^{th}$ frame of image and the screen space coordinates of the $m^{th}$ frame of image in a reprojection manner. By way of example and not limitation, when m mod N$\neq$1, the terminal device may correspond the screen space coordinates of the $i^{th}$ frame of image to the screen space coordinates of the $m^{th}$ frame of image via the reprojection module shown in FIG. 2 or FIG. 3.

More specifically, a view projection (view projection, VP) transformation matrix during rendering of each frame of main scene (namely, an image) may be obtained via a graphic interface hook (Hook) layer of an operating system of the terminal device. For example, the VP matrix includes but is not limited to a matrix of $4\times4$. The terminal device may further obtain image data of each frame of image, where the image data includes but is not limited to a pixel matrix, depth information (namely, a depth value), and pixel coordinates (indicating a location of a pixel). The terminal device one-to-one corresponds the screen space coordinates of the $i^{th}$ frame of image and the screen space coordinates of the $m^{th}$ frame of image based on depth information, pixel coordinates, and an inverse matrix of a VP matrix of the $i^{th}$ frame of image, and a VP matrix of the $m^{th}$ frame of image. As an example rather than a limitation, the depth information, the pixel coordinates, and a W value of the $i^{th}$ frame of image are combined to obtain a matrix. For example, if the depth information is a matrix of $1\times1$, the pixel coordinates are a matrix of $2\times1$, and the W value is a matrix of $1\times1$ (for example, the W value is 1.0), the depth information, the pixel coordinates, and the W value of the $i^{th}$ frame of image are combined to obtain a matrix of $4\times1$. For ease of description, the matrix is denoted as a "combination matrix". For another example, if the VP matrix of the $i^{th}$ frame of image and the VP matrix of the $m^{th}$ frame of image are both a matrix of $4\times4$, combination matrix$\times$inverse matrix of the VP matrix of the $i^{th}$ frame of image$\times$VP matrix of the $m^{th}$ frame of image can one-to-one correspond the screen space coordinates of the $i^{th}$ frame of image to the screen space coordinates of the $m^{th}$ frame of image, that is, can establish a one-to-one correspondence between a pixel of the $i^{th}$ frame of image and a pixel of the $m^{th}$ frame of image.

After establishing the one-to-one correspondence between the pixel of the $i^{th}$ frame of image and the pixel of the $m^{th}$ frame of image, the terminal device may determine, based on a static/dynamic separation mask of the $i^{th}$ frame of image and the static/dynamic separation mask of the $m^{th}$ frame of image, which static pixel in the $i^{th}$ frame of image can be reused by the $m^{th}$ frame of image.

Table 2 is a schematic table of a pixel reusing rule according to this embodiment of this application.

Table 2

| Pixel of the $i^{th}$ group of image data | Pixel of the $m^{th}$ group of images | Pixel source when the $m^{th}$ frame of image is rendered |
|---|---|---|
| Static | Static | $i^{th}$ group of image data |
| Static | Dynamic | $m^{th}$ group of image data |
| Dynamic | Static | The $m^{th}$ group of image data |
| Dynamic | Dynamic | The $m^{th}$ group of image data |

As shown in Table 2, based on the static/dynamic separation mask of the $i^{th}$ frame of image and the static/dynamic separation mask of the $m^{th}$ frame of image, when both a pixel of the $i^{th}$ group of image data in the first screen space and a pixel of the $m^{th}$ group of image data in the first screen space are static pixels, that is, when both the pixel in the first screen space corresponding to the $i^{th}$ frame of image and the pixel in the first screen space corresponding to the $m^{th}$ frame of image are static pixels, the terminal device may reuse, via the rendering reuse module shown in FIG. 2 or FIG. 3, the static pixel in the first screen space of the $i^{th}$ frame of image to render the first screen space of the $m^{th}$ frame of image. In other words, when both the pixel of the $i^{th}$ group of image data in the first screen space and the pixel of the $m^{th}$ group of image data in the first screen space are static pixels, a pixel used when the first screen space of the $m^{th}$ frame of image is rendered is from the $i^{th}$ group of image data. In this way, the pixel of the $i^{th}$ group of image data in the first screen space is reused. This helps reduce power consumption of shading computation at the mobile end, reduce occurrence of overheating, lagging, and the like, and further improve user experience.

Based on the static/dynamic separation mask of the $i^{th}$ frame of image and the static/dynamic separation mask of the $m^{th}$ frame of image, when both a pixel of the $i^{th}$ group of image data in the second screen space and a pixel of the $m^{th}$ group of image data in the second screen space are dynamic pixels, that is, when both the pixel in the second screen space corresponding to the $i^{th}$ frame of image and the pixel in the second screen space corresponding to the $m^{th}$ frame of image are dynamic pixels, the terminal device may render the second screen space of the $m^{th}$ frame of image based on the pixel in the second screen space of the $m^{th}$ group of image data. In other words, when both the pixel of the $i^{th}$ group of image data in the second screen space and the pixel of the $m^{th}$ group of image data in the second screen space are dynamic pixels, a pixel used when the second screen space of the $m^{th}$ frame of image is rendered is from the $m^{th}$ group of image data, and the pixel of the $i^{th}$ group of image data in the second screen space is not reused.

Based on the static/dynamic separation mask of the $i^{th}$ frame of image and the static/dynamic separation mask of the $m^{th}$ frame of image, when a type of the pixel of the $i^{th}$ group of image data in the second screen space and a type of the pixel of the $m^{th}$ group of image data in the second screen space are different, that is, when a type of the pixel of the $i^{th}$ frame of image in the second screen space and a type of the pixel of the $m^{th}$ frame of image in the second screen space are different, for example, when the pixel of the $i^{th}$ group of image data in the second screen space is a static pixel, and the pixel of the $m^{th}$ group of image data in the second screen space is a dynamic pixel; or the pixel of the $i^{th}$ group of image data in the second screen space is a dynamic pixel, and the pixel of the $m^{th}$ group of image data in the second screen space is a static pixel, the terminal device may render the second screen space of the $m^{th}$ frame of image based on the pixel of the $m^{th}$ group of image data in the second screen space. In other words, when the type of the pixel of the $i^{th}$ group of image data in the second screen space and the type of the pixel of the $m^{th}$ group of image data in the second screen space are different, the pixel used when the second screen space of the $m^{th}$ frame of image is rendered is from the $m^{th}$ group of image data, and the pixel of the $i^{th}$ group of image data in the second screen space is not reused.

It may be understood that the first screen space is a screen space in which both the pixel of the $i^{th}$ frame of image and the pixel of the $m^{th}$ frame of image are static, and the second screen space is a screen space in which both the pixel of the $i^{th}$ frame of image and the pixel of the $m^{th}$ frame of image are dynamic, or in which the type of the pixel of the $i^{th}$ frame of image and the type of the pixel of the $m^{th}$ frame of image are different.

Based on the foregoing solution, N (N≥2) frames of images are used as a group, and a first frame of image in the N frames of images is obtained based on a currently known rendering procedure, that is, a first frame of image in the N frames of images may be obtained by performing rendering based on all pixel values in image data of the first frame of image. At least one frame of image in another image in the N frames of images except the first frame of image may be obtained by performing rendering based on a static pixel of a previous frame of image of the image in the group of images, and at least a part of pixel values in image data of the image. In this way, a part of pixel values in another image in each group of images is reused for performing rendering to generate at least one frame of image in the group. This helps reduce power consumption of shading computation at the mobile end, reduce occurrence of overheating, lagging, and the like, and further improve user experience.

For better understanding of the image rendering method according to embodiments of this application, a software and hardware structure of a terminal device to which the image rendering method according to this embodiment of this

16

application is applicable is described below again with reference to FIG. 9.

FIG. 9 is a block diagram of still another structure of software of a terminal device to which an image rendering method according to an embodiment of this application is applicable.

As shown in FIG. 9, a plurality of applications to which the image rendering method provided in this embodiment of this application is applicable may be deployed at an application layer of the terminal device, for example, a game application 1, a game application 2, and a game application 3. A game engine may be deployed at the application layer. For example, the game engine may include but is not limited to a Unity engine.

An interception module, a static/dynamic identification module, a pixel-level static/dynamic separation module, a rendering rate update module, a rendering reuse module, a reprojection module, an image output module, and the like may be deployed at a framework layer of the terminal device. For detailed descriptions of these modules, refer to related descriptions in FIG. 2. For brevity, details are not described herein again. In a possible implementation, a graphic interface hook layer may be deployed on the terminal device, and an interception module, a static/dynamic identification module, a pixel-level static/dynamic separation module, a rendering rate update module, a rendering reuse module, a reprojection module, an image output module, and the like may be deployed at the graphic interface hook layer. The graphic interface hook layer may intercept and process a rendering command, and may further send a processed rendering command to a GPU or a CPU.

A graphics driver may be deployed at a driver layer of the terminal device. For example, the graphics driver may include but is not limited to OpenGL (OpenGL ES) used for embedded system (embedded systems, ESs).

The GPU and the CPU may be deployed at a hardware layer of the terminal device. The GPU may include but is not limited to an Arm Mali processor, a Qualcomm Adreno processor, or the like. The CPU may include but is not limited to a Kirin 9000 processor, a Qualcomm processor, or the like.

In this application, the terminal device may intercept a graphic API call at an operating system framework layer, and buffer related instruction and associated data. For example, N=2. A $(2x-1)^{th}$ frame of image may maintain an original rendering procedure, and is only separated into a dynamic object and a static object. In a rendering procedure of a $(2x)^{th}$ frame image, whether DrawCall is dynamic or static may be identified with reference to a feature of a command stream. An original shading rate is maintained for DrawCall of a dynamic object. A shading rate is reduced for DrawCall of a static object. In a post-processing part of rendering, a static object rendering reuse solution is added, to reuse, in the $(2x)^{th}$ frame image, a static pixel of the $(2x-1)^{th}$ frame image and output a final result image.

In some examples, Drawcall may be a draw call interface. The draw call interface may refer to a process in which a CPU sends a drawing command to a GPU once.

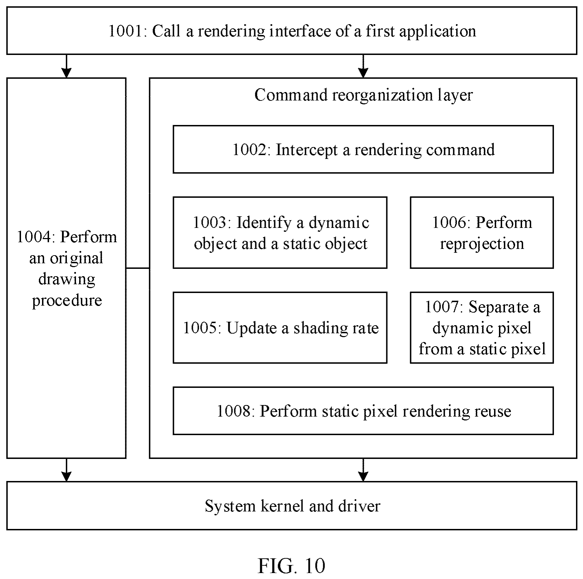

FIG. 10 is a schematic flowchart of implementing an image rendering method according to an embodiment of this application in an operating system.

It may be understood that software code (for example, a program) for implementing the image rendering method provided in this embodiment of this application may be deployed at a command reorganization layer of the operating system of a terminal device. As shown in FIG. 10, in this embodiment of this application, the terminal device may intercept, at the command reorganization layer, a rendering command delivered by a first application. The reorganization layer may include the interception module, the static/dynamic identification module, the pixel-level static/dynamic separation module, the rendering rate update module, the rendering reuse module, the reprojection module, and the like that are shown in FIG. 2 or FIG. 3.

Step 1001: Call a rendering interface of the first application.

The first application is any one of one or more preset applications to which the image rendering method provided in this application is applicable. When the rendering interface of the first application is called, the terminal device may be triggered to perform the image rendering method provided in this application.

Step 1002: Intercept a rendering command.

The terminal device may intercept one or more rendering commands corresponding to an $m^{th}$ frame of image from the first application.

Step 1003: Identify a dynamic object and a static object.

The terminal device may identify, based on a feature of each of the one or more rendering commands corresponding to the $m^{th}$ frame of image, the dynamic object and the static object that are included in the $m^{th}$ frame of image.

It may be understood that in the image rendering method provided in this application, regardless of whether m meets m mod N=1 or m mod N≠1, step 1002 and step 1003 need to be performed for the $m^{th}$ frame of image from the first application.

Step 1004: Perform an original drawing procedure.

When m mod N=1, after intercepting the one or more rendering commands corresponding to the $m^{th}$ frame of image, the terminal device may perform, based on a known image rendering method, the original drawing procedure in the known image rendering method.

Step 1005: Update a shading rate.

When m mod N≠1, after performing step 1003, the terminal device may reduce the shading rate of the static object, and maintain a shading rate of the dynamic object.

Step 1006: Perform reprojection.

When a part of pixels in an $i^{th}$ frame of image are reused for the $m^{th}$ frame of image, the terminal device may perform reprojection based on the $m^{th}$ group of image data and the $i^{th}$ group of image data, to correspond screen space coordinates of the $i^{th}$ frame of image to screen space coordinates of the $m^{th}$ frame of image.

Step 1007: Separate a dynamic pixel from a static pixel.

Regardless of whether m meets m mod N=1 or m mod N≠1, for the $m^{th}$ frame of image from the first application, after performing step 1003, the terminal device may obtain the static pixel and the dynamic pixel based on the static object and the dynamic object that are in the $m^{th}$ frame of image, to distinguish the static pixel and the dynamic pixel in the $m^{th}$ frame of image.

Step 1008: Perform static pixel rendering reuse.

When m mod N≠1, the terminal device may reuse a part of static pixels in the $i^{th}$ frame of image according to the pixel reuse rule in Table 2 when performing rendering to generate the $m^{th}$ frame of image.

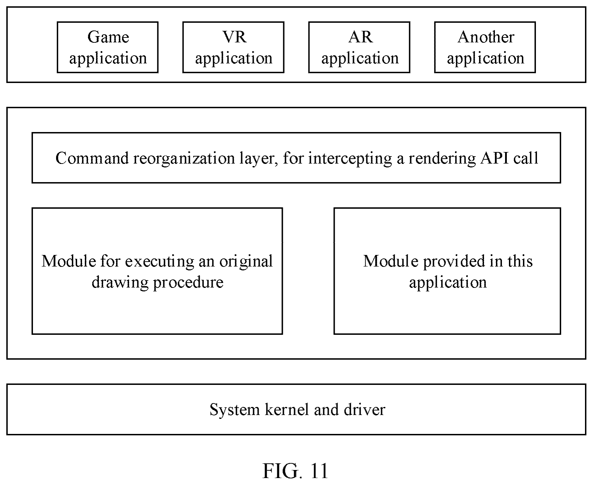

FIG. 11 is a block diagram of another structure of software and hardware of a terminal device to which an image rendering method according to an embodiment of this application is applicable.

As shown in FIG. 11, an application to which the image rendering method provided in this embodiment of this application is applicable may include but is not limited to a game application, a VR application, an AR application, or the like, and may further include another application. The terminal device to which the image rendering method provided in this embodiment of this application is applicable may include a command reset layer. The command reset layer may be configured to: obtain a rendering API call, and buffer a rendering command stream and data (for example, including but not limited to image data) related to the rendering command stream. The terminal device to which the image rendering method provided in this embodiment of this application is applicable may include a module configured to perform an original drawing procedure, and may further include a module provided in this application (for example, including but not limited to the static/dynamic identification module, the pixel-level static/dynamic separation module, the rendering rate update module, the rendering reuse module, the reprojection module, and the like shown in FIG. 2 or FIG. 3).

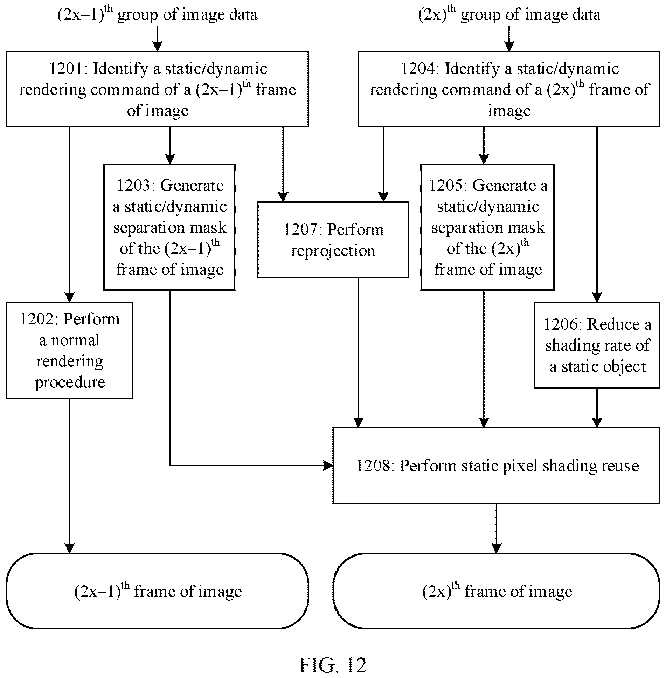

For better understanding of the image rendering method provided in this application, the following further describes the image rendering method provided in this application with reference to FIG. 12 to FIG. 15.

FIG. 12 is another schematic flowchart of an image rendering method according to an embodiment of this application.

As shown in FIG. 12, N=2 is used as an example. A process in which a terminal device processes $(2x-1)^{th}$ group of image data from a first application is different from a process of processing $(2x)^{th}$ group of image data from the first application. For example, in a process of performing rendering to generate an $(2x-1)^{th}$ frame of image, the terminal device may perform step 1201 and step 1202; and in a process of performing rendering to generate a $(2x)^{th}$ frame of image, the terminal device may perform step 1203 to step 1208. Rendering procedures of the $(2x-1)^{th}$ frame of image and the $(2x)^{th}$ frame of image that are adjacent are described below.

Step 1201: Identify a static/dynamic rendering command of the $(2x-1)^{th}$ frame of image.

The terminal device may obtain the $(2x-1)^{th}$ group of image data from the first application and a rendering command corresponding to the $(2x-1)^{th}$ frame of image, and further the terminal device can determine, based on the rendering command corresponding to the $(2x-1)^{th}$ frame of image, whether the rendering command is the dynamic rendering command or the static rendering command.

Step 1202: Perform a normal rendering procedure.

The terminal device may perform the normal rendering procedure based on the $(2x-1)^{th}$ group of image data, to perform rendering to generate the $(2x-1)^{th}$ frame of image.

Step 1203: Generate a static/dynamic separation mask of the $(2x-1)^{th}$ frame of image.

Before performing rendering to generate the $(2x)^{th}$ frame of image, the terminal device may generate the static/dynamic separation mask of the $(2x-1)^{th}$ frame of image after performing step 1201. For detailed descriptions of generating the static/dynamic separation mask of the $(2x-1)^{th}$ frame of image, refer to related descriptions in the foregoing Implementation A. For brevity, details are not described herein again.

Step 1204: Identify a static/dynamic rendering command of the $(2x)^{th}$ frame of image.

The terminal device may obtain the $(2x)^{th}$ group of image data from the first application and a rendering command corresponding to the $(2x)^{th}$ frame of image, and further the terminal device can determine, based on the rendering command corresponding to the $(2x)^{th}$ frame of image, whether the rendering command is the dynamic rendering command or the static rendering command.

Step 1205: Generate a static/dynamic separation mask of the $(2x)^{th}$ frame of image.

Before performing rendering to generate the $(2x)^{th}$ frame of image, the terminal device may generate the static/dynamic separation mask of the $(2x)^{th}$ frame of image after performing step 1204. For detailed descriptions of generating the static/dynamic separation mask of the $(2x)^{th}$ frame of image, refer to related descriptions in the foregoing Implementation A. For brevity, details are not described herein again.

Step 1206: Reduce a shading rate of a static object.

After the terminal device performs step 1204, the terminal device therefore determines which part of the $(2x)^{th}$ frame of image is the static object and which part is a dynamic object. Therefore, the terminal device can reduce the shading rate of the static object, and maintain a shading rate of the dynamic object.

Step 1207: Perform reprojection.

The terminal device may one-to-one correspond, in a reprojection manner based on a reprojection manner, screen space coordinates of an $(odd-number)^{th}$ frame of image and screen space coordinates of an $(even-number)^{th}$ frame of image, to subsequently determine which part of pixels of the $(odd-number)^{th}$ frame of image can be reused by the $(even-number)^{th}$ frame of image.

Step 1208: Perform static pixel shading reuse.

After performing step 1203, step 1205, step 1206, and step 1207, the terminal device may render the $(2x)^{th}$ frame of image. In a process of rendering to generate the $(2x)^{th}$ frame of image, a part of static pixels in the $(2x-1)^{th}$ frame of image are reused, and the static object of the $(2x)^{th}$ frame of image is rendered based on a reduced shading rate in step 1206.

It may be understood that, in this embodiment of this application, a sequence of step 1203, step 1205, step 1206, and step 1207 is not limited.

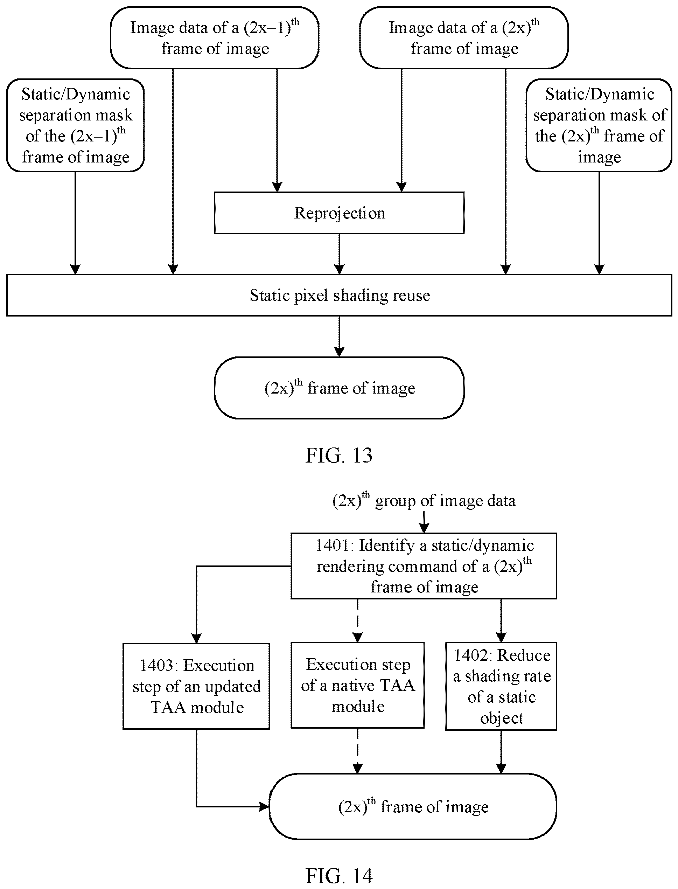

FIG. 13 is a diagram of data related to an image rendering method according to an embodiment of this application.

As shown in FIG. 13, N=2 is still used as an example. A process in which a terminal device processes $(2x-1)^{th}$ group of image data from a first application is different from a process of processing $(2x)^{th}$ group of image data from the first application. The procedure of the image rendering method shown in FIG. 12 is used as an example. In a process of performing rendering to generate a $(2x)^{th}$ frame of image, reprojection and static pixel shading reuse need to be performed. Reprojection needs to use some data in image data of a $(2x-1)^{th}$ frame of image and some data in image data of a $(2x)^{th}$ frame of image. Image data may include but is not limited to a pixel matrix, depth information, pixel coordinates, and a VP matrix of an image. For example, reprojection needs to use depth information, pixel coordinates, and a VP matrix of the $(2x-1)^{th}$ frame of image, and a VP matrix of the $(2x)^{th}$ frame of image. A static/dynamic separation mask of the $(2x-1)^{th}$ frame of pixel, the image data of the $(2x-1)^{th}$ frame of image, a static/dynamic separation mask of the $(2x)^{th}$ frame of pixel, and image data of the $(2x)^{th}$ frame of image need to be used for static pixel shading reuse.

FIG. 14 is still another schematic flowchart of an image rendering method according to an embodiment of this application.

Different from that in the procedure of the image rendering method shown in FIG. 12, more native rendering data of some game applications is used in a procedure of the image rendering method shown in FIG. 14.

As shown in FIG. 14, N=2 is still used as an example. A process in which a terminal device processes $(2x-1)^{th}$ group of image data from a first application is different from a process of processing $(2x)^{th}$ group of image data from the first application.

In the procedure of the image rendering method shown in FIG. 14, for a processing process of the $(2x-1)^{th}$ group of image data, refer to step 1201 and step 1202 in FIG. 12. For brevity, details are not described herein again.

In the procedure of the image rendering method shown in FIG. 14, the processing process of the $(2x-1)^{th}$ group of image data may include step 1401 to step 1403.

Step 1401: Identify a static/dynamic rendering command of a $(2x)^{th}$ frame of image.

For detailed descriptions of step 1401, refer to related descriptions of step 1204 in FIG. 12. For brevity, details are not described herein again.

Step 1402: Reduce a shading rate of a static object.

For detailed descriptions of step 1402, refer to related descriptions of step 1206 in FIG. 12. For brevity, details are not described herein again.

Step 1403 is an execution step of an updated TAA module.

It may be understood that, in this implementation, a currently known native TAA module may be replaced with the updated TAA module. The updated TAA module adds a static pixel shading reuse capability based on the native TAA module. The terminal device may perform, based on the updated TAA module, static pixel shading reuse after performing a step (including but not limited to performing edge smoothing on an object) that needs to be performed by the native TAA module, to perform rendering to generate the $(2x)^{th}$ frame of image.

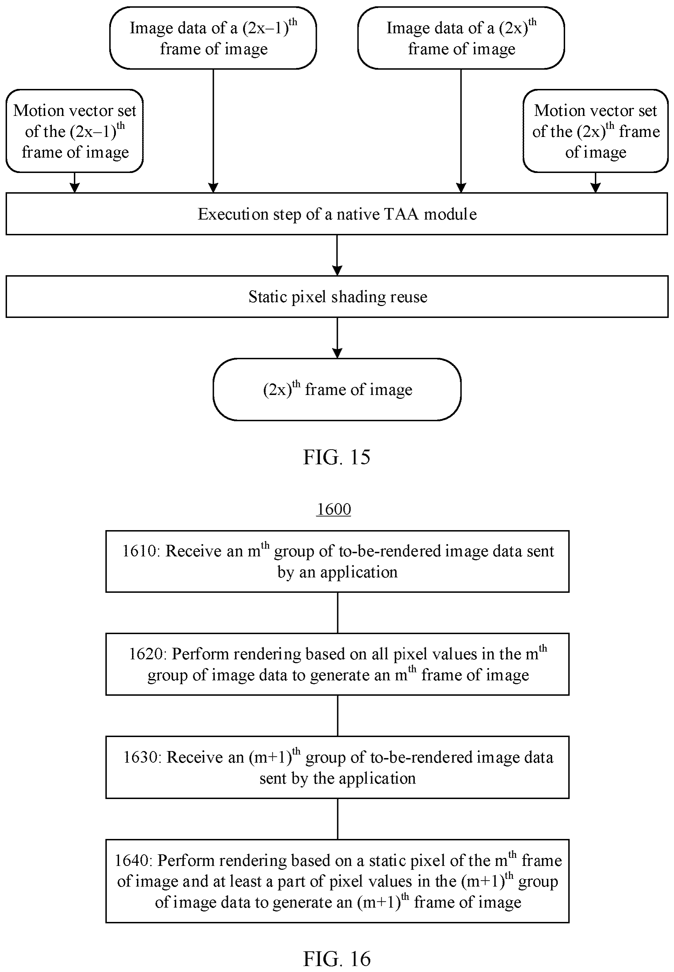

FIG. 15 is another diagram of data related to an image rendering method according to an embodiment of this application.

As shown in FIG. 15, N=2 is still used as an example. A process in which a terminal device processes $(2x-1)^{th}$ group of image data from a first application is different from a process of processing $(2x)^{th}$ group of image data from the first application, where static pixel shading reuse needs to be performed in a process of performing rendering to generate a $(2x)^{th}$ frame of image.

As shown in FIG. 15, because a dynamic object and a static object can be distinguished in a native rendering procedure of some game applications, after static/dynamic separation, a static/dynamic separation mask is not generated, but a static pixel and a dynamic pixel can be distinguished based on a motion vector set. After an execution step required by a native TAA module is performed, a shading rate is controlled and static pixel shading reuse is performed. For example, image data of a $(2x-1)^{th}$ frame of image, a motion vector set of the $(2x-1)^{th}$ frame of image, image data of the $(2x)^{th}$ frame of image, and a motion vector set of the $(2x)^{th}$ frame of image may be input into the native TAA module. After the native TAA module completes anti-aliasing, the terminal device may distinguish between a static pixel and a dynamic pixel by using the motion vector set of the $(2x-1)^{th}$ frame of image and the motion vector set of the $(2x)^{th}$ frame of image, and based on the pixel reuse rule in Table 2, when performing rendering to generate the $(2x)^{th}$ frame image, reuse a part of static pixels in the previous $(2x-1)^{th}$ frame image of the $(2x)^{th}$ frame image, and finally output the $(2x)^{th}$ frame image.

In some examples, the image corresponds to a picture displayed on an electronic device like a mobile phone, for example, a photo, a video, or a game picture. A photo is used as an example. Each pixel of the photo may include four channels RBGA, where the three channels RGB may be used to determine an actual display color of a pixel, and the A channel is used to determine transparency of the pixel. For photos with a same value of the A channel, for example, the value of the A channel is all 1, or the value of the A channel of the picture displayed on the mobile phone is 1 by default. In some scenarios in which the A channel is disabled, the A channel may be used to record other information. For example, whether the pixel is dynamic or static may be marked.

FIG. 16 is a schematic flowchart of another image rendering method according to an embodiment of this application.

As shown in FIG. 16, the method 1600 may include step 1610 to step 1640. The steps of the method 1600 may be performed by a terminal device at a mobile end (which may be referred to as a mobile terminal for short), or the method 1600 may be performed by a component (like a chip or a chip system) configured in a terminal device, or may be implemented by a logical module or software that can implement all or some functions of a terminal device. This is not limited in embodiments of this application. The terminal device may have the structure shown in FIG. 1, FIG. 2, or FIG. 3. This is not limited in embodiments of this application. The following describes the steps in FIG. 16 in detail.

In step 1610, an $m^{th}$ group of to-be-rendered image data sent by an application is received.

The image data includes a plurality of pixel values for generating an image, $m \geq 1$, and m is an integer. In some examples, the image data includes but is not limited to a pixel matrix, depth information, pixel coordinates, and the like.

The terminal device may receive the $m^{th}$ group of to-be-rendered image data sent by the application.

In a possible implementation, receiving the $m^{th}$ group of to-be-rendered image data sent by the application includes: receiving the $m^{th}$ group of to-be-rendered image data from a first application, where the first application is any one of one or more preset applications. For detailed descriptions, refer to related descriptions of step 410 in the foregoing method 400. For brevity, details are not described herein again.

In step 1620, rendering is performed based on all the pixel values in the $m^{th}$ group of image data to generate an $m^{th}$ frame of image.

The terminal device may perform a currently known image rendering method based on the $m^{th}$ group of image data, that is, the terminal device may perform rendering based on all the pixel values in the $m^{th}$ group of image data to obtain the $m^{th}$ frame of image.

In step 1630, an $(m+1)^{th}$ group of to-be-rendered image data sent by the application is received.

After performing rendering to generate the $m^{th}$ frame of image, the terminal device may receive image data of a next frame of image of the $m^{th}$ frame of image that is sent by the application, that is, the terminal device may receive the to-be-rendered $(m+1)^{th}$ group of image data sent by the application.

In step 1640, rendering is performed based on a static pixel of the $m^{th}$ frame of image and at least a part of pixel values in the $(m+1)^{th}$ group of image data to generate an $(m+1)^{th}$ frame of image.

The static pixel of the $m^{th}$ frame of image is obtained based on the $m^{th}$ group of image data.

The terminal device may determine, based on the static pixel of the $m^{th}$ frame of image, the $m^{th}$ group of image data, and the $(m+1)^{th}$ group of image data, whether a part of static pixels of the $m^{th}$ frame of image can be reused in a rendering and generation process of the $(m+1)^{th}$ frame of image. When a part of static pixels of the $m^{th}$ frame of image can be reused in the rendering and generation process of the $(m+1)^{th}$ frame of image, the terminal device may perform rendering based on the static pixel of the $m^{th}$ frame of image and at least a part of pixel values in the $(m+1)^{th}$ group of image data to generate the $(m+1)^{th}$ frame of image.

In a possible implementation, before performing rendering to generate the $(m+1)^{th}$ frame of image, the method 1600 further includes: determining, based on a feature or features of one or more rendering commands corresponding to a $y^{th}$ frame of image, a static pixel and a dynamic pixel of the $y^{th}$ frame of image, where $y \in [m, m+1]$.

That is, before performing rendering to generate the $(m+1)^{th}$ frame of image, the terminal device may determine the static pixel and the dynamic pixel of the $m^{th}$ frame of image, and may determine the static pixel and the dynamic pixel of the $(m+1)^{th}$ frame of image.

The terminal device may determine, based on the feature or features of the one or more rendering commands corresponding to the $m^{th}$ frame of image, the static pixel and the dynamic pixel of the $m^{th}$ frame of image via the static/dynamic identification module and the pixel-level static/dynamic separation module in FIG. 2 or FIG. 3. Without loss of generality, the terminal device may also determine, based on a feature or features of one or more rendering commands corresponding to the $(m+1)^{th}$ frame of image, the static pixel and the dynamic pixel of the $(m+1)^{th}$ frame of image via the static/dynamic identification module and the pixel-level static/dynamic separation module in FIG. 2 or FIG. 3.

In a possible implementation, the feature of the rendering command includes one or more of the following: a program alias, a program variable name, or a program index buffer name. For detailed descriptions, refer to related descriptions about features of the rendering command in the foregoing method 400. For brevity, details are not described herein again.

This application provides Implementation 1 and Implementation 2, to implement "determining the static pixel and the dynamic pixel of the $m^{th}$ frame of image based on the feature or features of the one or more rendering commands corresponding to the $y^{th}$ frame of image". Implementation 1 and Implementation 2 are separately described in detail below.

Implementation 1: Determining, based on the feature or features of the one or more rendering commands corresponding to the $y^{th}$ frame of image, the static pixel and the dynamic pixel of the $y^{th}$ frame of image includes: determining, based on a feature of each of the one or more rendering commands, a static object and a dynamic object that are included in the $y^{th}$ frame of image; determining the static pixel of the $y^{th}$ frame of image based on the static object; and determining the dynamic pixel of the $y^{th}$ frame of image based on the dynamic object.

For detailed descriptions of Implementation 1, refer to related descriptions in Implementation A in the foregoing method 400. For brevity, details are not described herein again.

In a possible implementation, after determining the static pixel and the dynamic pixel of the $y^{th}$ frame of image, the method 1600 further includes: marking the static pixel and the dynamic pixel based on an A channel or a stencil buffer, where both the static pixel and the dynamic pixel include an RGBA channel.

For detailed descriptions of marking the static pixel and the dynamic pixel of the $y^{th}$ frame of image, refer to related descriptions of marking the static pixel and the dynamic pixel of the $m^{th}$ frame of image in the foregoing method 400. For brevity, details are not described herein again.

Implementation 2: Determining, based on the feature or features of the one or more rendering commands corresponding to the $y^{th}$ frame of image, the static pixel and the dynamic pixel of the $y^{th}$ frame of image includes: determining, based on a feature of each of the one or more rendering commands, a static object and a dynamic object that are included in the $y^{th}$ frame of image, to obtain a motion vector set of the $y^{th}$ frame of image; and determining, based on the motion vector set, the static pixel and the dynamic pixel of the $y^{th}$ frame of image, where a value of a motion vector corresponding to the static object in the $y^{th}$ frame of image is different from a value of a motion vector corresponding to the dynamic object in the $y^{th}$ frame of image.

For detailed descriptions of Implementation 2, refer to related descriptions in Implementation B in the method 400. For brevity, details are not described herein again.

In a possible implementation, the method 1600 further includes: intercepting the one or more rendering commands corresponding to the $y^{th}$ frame of image.

For detailed descriptions of intercepting the one or more rendering commands corresponding to the $y^{th}$ frame of image, refer to related descriptions of intercepting the one or more rendering commands corresponding to the $m^{th}$ frame of image in the foregoing method 400. For brevity, details are not described herein again.

In a possible implementation, after determining the static object included in the $(m+1)^{th}$ frame of image, the method further includes: reducing a shading rate of the static object in the $(m+1)^{th}$ frame of image, where the $(m+1)^{th}$ frame of image is rendered based on an updated shading rate.

For detailed descriptions of reducing the shading rate of the static object in the $(m+1)^{th}$ frame of image, refer to related descriptions of reducing the shading rate of the static object in the $m^{th}$ frame of image after the static object included in the $m^{th}$ frame of image is determined when $m \bmod N \neq 1$ in the foregoing method 400. For brevity, details are not described herein again.

In a possible implementation, performing rendering based on the static pixel of the $m^{th}$ frame of image and the at least a part of pixel values in the $(m+1)^{th}$ group of image data to generate the $(m+1)^{th}$ frame of image includes: corresponding screen space coordinates of the $m^{th}$ frame of image to screen space coordinates of the $(m+1)^{th}$ frame of image; and when both a pixel in a first screen space corresponding to the $m^{th}$ frame of image and a pixel in a first screen space corresponding to the $(m+1)^{th}$ frame of image are static pixels, reusing the pixel in the first screen space of the $m^{th}$ frame of image to render the first screen space of the $m^{th}$ frame of image; or when both a pixel in a second screen space corresponding to the $m^{th}$ frame of image and a pixel in a second screen space corresponding to the $(m+1)^{th}$ frame of image are dynamic pixels, or when a type of the pixel in the second screen space of the $m^{th}$ frame of image and a type of the pixel in the second screen space of the $(m+1)^{th}$ frame of image are different, rendering the second screen space of the $(m+1)^{th}$ frame of image based on the pixel in the second screen space of the $(m+1)^{th}$ frame of image.

For detailed descriptions of "performing rendering based on the static pixel of the $m^{th}$ frame of image and the at least a part of pixel values in the $(m+1)^{th}$ group of image data to generate the $(m+1)^{th}$ frame of image", refer to related descriptions of "when $m \bmod N \neq 1$, performing rendering based on the $m^{th}$ group of image data to generate the $m^{th}$ frame of image" in the foregoing method 400. For brevity, details are not described herein again.

In a possible implementation, the method 1600 further includes: receiving an $(m+n)^{th}$ group of to-be-rendered image data sent by the application, where n>1, and x is an integer; and performing rendering based on the static pixel of the $m^{th}$ frame of image or a static pixel of an $(m+n-1)^{th}$ frame of image, and at least a part of pixel values in the $(m+n)^{th}$ group of image data to generate an $(m+n)^{th}$ frame of image, where the static pixel of the $(m+n-1)^{th}$ frame of image is obtained based on the $(m+n-1)^{th}$ group of image data.

In an example, for example, if n=2, m+n is m+2. After performing rendering to generate the $(m+1)^{th}$ frame of image, the terminal device may further receive image data of a next frame of image of the $(m+1)^{th}$ frame of image that is sent by the application, that is, the terminal device may receive to-be-rendered $(m+2)^{th}$ group of image data sent by the application. The terminal device may perform rendering based on the static pixel of the $m^{th}$ frame of image and at least a part of pixel values in the $(m+2)^{th}$ group of image data to generate an $(m+2)^{th}$ frame of image; or the terminal device may perform rendering based on the static pixel of the $(m+1$ (obtained based on m+2-1)$)^{th}$ frame of image and at least a part of pixel values in the $(m+2)^{th}$ group of image data to generate an $(m+2)^{th}$ frame of image.

In another example, for example, if n=5, m+n is m+5. After performing rendering to generate the $(m+1)^{th}$ frame of image, the terminal device may receive to-be-rendered $(m+5)^{th}$ group of image data sent by the application. The terminal device may perform rendering based on the static pixel of the $m^{th}$ frame of image and at least a part of pixel values in the $(m+5)^{th}$ group of image data to generate an $(m+5)^{th}$ frame of image; or the terminal device may perform rendering based on the static pixel of the $(m+4$ (obtained based on m+5-1)$)^{th}$ frame of image and at least a part of pixel values in the $(m+5)^{th}$ group of image data to generate an $(m+5)^{th}$ frame of image.

Based on the foregoing solution, a part of pixel values of a previous frame of image of the frame of image is reused for performing rendering to generate at least one frame of image in a plurality of to-be-rendered frames of images. This helps reduce power consumption of shading computation of the terminal device at the mobile end, reduce occurrence of overheating, lagging, and the like, and further improve user experience.

In some examples, a picture of an application (for example, a game application) is extracted when the application is running, and non-overlapping parts between two consecutive motion frames are zoomed in and compared, observe different shading rates between the two consecutive motion frames.

In some examples, RenderDoc is used to open a corresponding application (for example, a game application), to capture a command stream and a shader, and analyze a graphics library (graphics library, GL) command or a Vulkan command. This can view a motion frame for static/dynamic separation, reduce a shading rate of a static object in the motion frame, and add a rendering command for rendering reuse.

An embodiment of this application further provides a terminal device. The terminal device includes corresponding modules configured to perform the steps in any one of embodiments in FIG. 4, FIG. 5, FIG. 7, FIG. 8, FIG. 10, and FIG. 12 to FIG. 16. The modules included in the terminal device may be implemented in a software and/or hardware manner.

An embodiment of this application further provides a terminal device. The terminal device includes a memory and a processor. The memory is configured to store a program, and the processor is configured to invoke and execute the program, so that the terminal device performs the steps in any one of embodiments in FIG. 4, FIG. 5, FIG. 7, FIG. 8, FIG. 10, and FIG. 12 to FIG. 16.

This application further provides a chip system. The chip system includes at least one processor, configured to implement functions related to the steps in any one of embodiments in FIG. 4, FIG. 5, FIG. 7, FIG. 8, FIG. 10, and FIG. 12 to FIG. 16.

In a possible design, the chip system further includes a memory, the memory is configured to store program instructions and data, and the memory is located inside or outside the processor.

The chip system may include a chip, or may include a chip and another discrete component.

An embodiment of this application further provides a readable storage medium. The readable storage medium stores a program. When the program is executed by a terminal device, the terminal device is enabled to perform the steps in any one of embodiments in FIG. 4, FIG. 5, FIG. 7, FIG. 8, FIG. 10, and FIG. 12 to FIG. 16.

An embodiment of this application further provides a program product, including a program. When the program is run by a terminal device, the terminal device is enabled to perform the steps in any one of embodiments in FIG. 4, FIG. 5, FIG. 7, FIG. 8, FIG. 10, and FIG. 12 to FIG. 16.

It should be noted that the processor in embodiments of this application may be an integrated circuit chip, and has a signal processing capability. In an implementation process, the steps in the foregoing method embodiments can be completed by using a hardware integrated logical circuit in the processor, or by using an instruction in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory.

Terms such as "unit" and "module" used in this specification may indicate device-related entities, hardware, firmware, combinations of hardware and software, software, or software being executed.

A person of ordinary skill in the art may be aware that, in combination with various illustrative logical blocks (illustrative logical blocks) and steps (steps) described in embodiments disclosed in this specification may be implemented by electronic hardware or a combination of software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the described apparatus embodiments are merely examples. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected based on actual requirements to achieve the objectives of the solutions of embodiments.

In addition, function modules in embodiments of this application may be integrated into one processing module, or each of the modules may exist alone physically, or two or more units are integrated into one module.

When the functions are implemented in a form of software functional unit and sold or used as an independent product, the functions may be stored in a readable storage medium. Based on such an understanding, the technical solutions of this application essentially, or the part contributing to the conventional technology, or a part of the technical solutions may be implemented in a form of software product. The software product is stored in a storage medium and includes several instructions for instructing a device to perform all or some of the steps of the methods described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  An image rendering method, applied to a terminal device, wherein the method comprises:

    receiving an $m^{th}$ group of to-be-rendered image data sent by an application, wherein the image data comprises a plurality of pixel values for generating an image, $m \geq 1$, and m is an integer;
    performing rendering based on all the pixel values in the $m^{th}$ group of image data to generate an $m^{th}$ frame of image;
    receiving an $(m+1)^{th}$ group of to-be-rendered image data sent by the application; and
    performing rendering based on a static pixel of the $m^{th}$ frame of image and at least a part of pixel values in the $(m+1)^{th}$ group of image data to generate an $(m+1)^{th}$ frame of image, wherein the static pixel of the $m^{th}$ frame of image is obtained based on the $m^{th}$ group of image data.

2.  The method according to claim 1, wherein before performing rendering to generate the $(m+1)^{th}$ frame of image, the method further comprises:
    determining, based on a feature or features of one or more rendering commands corresponding to a $y^{th}$ frame of image, a static pixel and a dynamic pixel of the $y^{th}$ frame of image, wherein $y \in [m, m+1]$.

3. The method according to claim 2, wherein determining, based on the feature or features of the one or more rendering commands corresponding to the $y^{th}$ frame of image, the static pixel and the dynamic pixel of the $y^{th}$ frame of image comprises:

   determining, based on a feature of each of the one or more rendering commands, a static object and a dynamic object that are comprised in the $y^{th}$ frame of image;
   determining the static pixel of the $y^{th}$ frame of image based on the static object; and
   determining the dynamic pixel of the $y^{th}$ frame of image based on the dynamic object.

4. The method according to claim 3, wherein after determining the static pixel and the dynamic pixel of the $y^{th}$ frame of image, the method further comprises:
   marking the static pixel and the dynamic pixel based on an A channel or a stencil buffer, wherein both the static pixel and the dynamic pixel comprise an RGBA channel.

5. The method according to claim 2, wherein determining, based on the feature or features of the one or more rendering commands corresponding to the $y^{th}$ frame of image, the static pixel and the dynamic pixel of the $y^{th}$ frame of image comprises:

   determining, based on a feature of each of the one or more rendering commands, a static object and a dynamic object that are comprised in the $y^{th}$ frame of image, to obtain a motion vector set of the $y^{th}$ frame of image; and
   determining, based on the motion vector set, the static pixel and the dynamic pixel of the $y^{th}$ frame of image, wherein a value of a motion vector corresponding to the static object in the $y^{th}$ frame of image is different from a value of a motion vector corresponding to the dynamic object in the $y^{th}$ frame of image.

6. The method according to any one of claims 3 to 5, wherein after determining the static object comprised in the $(m+1)^{th}$ frame of image, the method further comprises:
   reducing a shading rate of the static object in the $(m+1)^{th}$ frame of image, wherein the $(m+1)^{th}$ frame of image is rendered based on an updated shading rate.

7. The method according to any one of claims 2 to 6, wherein the feature of the rendering command comprises one or more of the following:
   a program alias, a program variable name, or a program index buffer name.

8. The method according to any one of claims 2 to 7, wherein the method further comprises:
   intercepting the one or more rendering commands corresponding to the $y^{th}$ frame of image.

9. The method according to any one of claims 1 to 8, wherein performing rendering based on the static pixel of the $m^{th}$ frame of image and the at least a part of pixel values in the $(m+1)^{th}$ group of image data to generate the $(m+1)^{th}$ frame of image comprises:

   corresponding screen space coordinates of the $m^{th}$ frame of image to screen space coordinates of the $(m+1)^{th}$ frame of image; and
   when both a pixel in a first screen space corresponding to the $m^{th}$ frame of image and a pixel in a first screen space corresponding to the $(m+1)^{th}$ frame of image are static pixels, reusing the pixel in the first screen space of the $m^{th}$ frame of image to render the first screen space of the $m^{th}$ frame of image; or
   when both a pixel in a second screen space corresponding to the $m^{th}$ frame of image and a pixel in a second screen space corresponding to the $(m+1)^{th}$ frame of image are dynamic pixels, or when a type of the pixel in the second screen space of the $m^{th}$ frame of image and a type of the pixel in the second screen space of the $(m+1)^{th}$ frame of image are different, rendering the second screen space of the $(m+1)^{th}$ frame of image based on the pixel in the second screen space of the $(m+1)^{th}$ frame of image.

10. The method according to any one of claims 1 to 9, wherein the method further comprises:

    receiving an $(m+n)^{th}$ group of to-be-rendered image data sent by the application, wherein $n>1$, and $n$ is an integer; and
    performing rendering based on the static pixel of the $m^{th}$ frame of image or a static pixel of an $(m+n-1)^{th}$ frame of image, and at least a part of pixel values in the $(m+n)^{th}$ group of image data to generate an $(m+n)^{th}$ frame of image, wherein the static pixel of the $(m+n-1)^{th}$ frame of image is obtained based on the $(m+n-1)^{th}$ group of image data.

11. An image rendering method, applied to a terminal device, wherein the method comprises:

receiving an $m^{th}$ group of to-be-rendered image data sent by an application, wherein the $m^{th}$ group of image data comprises a plurality of pixel values for generating an image, $m \geq 1$, and m is an integer; and
performing rendering based on the $m^{th}$ group of image data to generate an $m^{th}$ frame of image, wherein
when m mod N=1, the $m^{th}$ frame of image is obtained by performing rendering based on all the pixel values in the $m^{th}$ group of image data; or
when m mod N≠1, the $m^{th}$ frame of image is obtained by performing rendering based on a static pixel of an $i^{th}$ frame of image and at least a part of pixel values in the $m^{th}$ group of image data, and the static pixel of the $i^{th}$ frame of image is obtained based on an $i^{th}$ group of image data; and

N is a preset integer, N≥2, and $\left( \left\lceil \frac{m}{N} \right\rceil - 1 \right) \times N + 1 \leq i \leq m - 1$ .

12. The method according to claim 11, wherein before performing rendering to generate the $m^{th}$ frame of image, the method further comprises:
determining, based on a feature or features of one or more rendering commands corresponding to the $m^{th}$ frame of image, a static pixel and a dynamic pixel of the $m^{th}$ frame of image.

13. The method according to claim 12, wherein determining, based on the feature or features of the one or more rendering commands corresponding to the $m^{th}$ frame of image, the static pixel and the dynamic pixel of the $m^{th}$ frame of image comprises:

determining, based on a feature of each of the one or more rendering commands, a static object and a dynamic object that are comprised in the $m^{th}$ frame of image;
determining the static pixel based on the static object; and
determining the dynamic pixel based on the dynamic object.

14. The method according to claim 13, wherein after determining the static pixel and the dynamic pixel of the $m^{th}$ frame of image, the method further comprises:
marking the static pixel and the dynamic pixel based on an A channel or a stencil buffer, wherein both the static pixel and the dynamic pixel comprise an RGBA channel.

15. The method according to claim 12, wherein determining, based on the feature or features of the one or more rendering commands corresponding to the $m^{th}$ frame of image, the static pixel and the dynamic pixel of the $m^{th}$ frame of image comprises:

determining, based on a feature of each of the one or more rendering commands, a static object and a dynamic object that are comprised in the $m^{th}$ frame of image, to obtain a motion vector set of the $m^{th}$ frame of image; and
determining the static pixel and the dynamic pixel based on the motion vector set, wherein a value of a motion vector corresponding to the static object is different from a value of a motion vector corresponding to the dynamic object.

16. The method according to any one of claims 13 to 15, wherein when m mod N≠1, and after determining the static object comprised in the $m^{th}$ frame of image, the method further comprises:
reducing a shading rate of the static object in the $m^{th}$ frame of image, wherein the $m^{th}$ frame of image is rendered based on an updated shading rate.

17. The method according to any one of claims 12 to 16, wherein the feature of the rendering command comprises one or more of the following:
a program alias, a program variable name, or a program index buffer name.

18. The method according to any one of claims 12 to 17, wherein the method further comprises:
intercepting the one or more rendering commands corresponding to the $m^{th}$ frame of image.

19. The method according to any one of claims 11 to 18, wherein when m mod N≠1, performing rendering based on the $m^{th}$ group of image data to generate the $m^{th}$ frame of image comprises:

corresponding screen space coordinates of the $i^{th}$ frame of image to screen space coordinates of the $m^{th}$ frame of image; and

when both a pixel in a first screen space corresponding to the $i^{th}$ frame of image and a pixel in a first screen space corresponding to the $m^{th}$ frame of image are static pixels, reusing the pixel in the first screen space of the $i^{th}$ frame of image to render the first screen space of the $m^{th}$ frame of image; or

when both a pixel in a second screen space corresponding to the $i^{th}$ frame of image and a pixel in a second screen space corresponding to the $m^{th}$ frame of image are dynamic pixels, or when a type of the pixel in the second screen space of the $i^{th}$ frame of image and a type of the pixel in the second screen space of the $m^{th}$ frame of image are different, rendering the second screen space of the $m^{th}$ frame of image based on the pixel in the second screen space of the $m^{th}$ frame of image.

20. A terminal device, comprising a processor and a memory, wherein

the memory is configured to store a program; and
the processor is configured to invoke the program, to enable the terminal device to perform the method according to any one of claims 1 to 19.

21. A readable storage medium, wherein the readable storage medium stores a program, and when the program is executed, a terminal device is enabled to perform the method according to any one of claims 1 to 19.

22. A program product, comprising a program, wherein when the program is run, a terminal device is enabled to perform the method according to any one of claims 1 to 19.

Terminal device 100

FIG. 1

| Application layer | Third-party application | System application |
| --- | --- | --- |

| Framework layer | Interception module | Static/Dynamic identification module | Pixel-level static/ dynamic separation module | Image output module |
| --- | --- | --- | --- | --- |
| | Rendering rate update module | Rendering reuse module | Reprojection module | |

| System service layer | ... |
| --- | --- |

| Kernel layer | — — — Kernel abstraction layer — — — |
| --- | --- |
| | ... |

FIG. 2

| Application layer | | Third-party application | | | System application | |
|---|---|---|---|---|---|---|

| Application framework layer | Interception module | Static/Dynamic identification module | Pixel-level static/ dynamic separation module | | Image output module |
|---|---|---|---|---|---|
| | Rendering rate update module | Rendering reuse module | Reprojection module | | |

| System library | | ... | | Android runtime |
|---|---|---|---|---|

| Kernel layer | | ... | |
|---|---|---|---|

Underlying system

| Hardware | | ... | |
|---|---|---|---|

FIG. 3

400

410: Receive an m$^{th}$ group of to-be-rendered image data sent by an application

420: Perform rendering based on the m$^{th}$ group of image data to generate an m$^{th}$ frame of image

FIG. 4

An application starts and runs

Determine whether the application is an application in an application allowlist

Yes

Perform an image rendering method provided in this application

No

Perform a known image rendering method

FIG. 5

| 0 | 0 | 0 | 0 | 0 | 0 | 0 | 0 | 0 | 0 | 0 | 0 | 0 | 0 | 0 | 0 | 0 | 0 | 0 | 0 |
|---|---|---|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 1 | 1 | 1 | 1 | 0 | 0 |
| 0 | 0 | 0 | 1 | 1 | 0 | 0 | 0 | 0 | 0 | 0 | 0 | 0 | 0 | 1 | 1 | 1 | 1 | 0 | 0 |
| 0 | 0 | 1 | 1 | 1 | 1 | 0 | 0 | 0 | 0 | 0 | 0 | 0 | 0 | 1 | 1 | 1 | 1 | 0 | 0 |
| 0 | 1 | 1 | 1 | 1 | 1 | 1 | 0 | 0 | 0 | 0 | 0 | 0 | 0 | 1 | 1 | 1 | 1 | 0 | 0 |
| 0 | 0 | 1 | 1 | 1 | 1 | 0 | 0 | 0 | 0 | 0 | 0 | 0 | 0 | 0 | 0 | 0 | 0 | 0 | 0 |
| 0 | 0 | 0 | 1 | 1 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 1 | 0 | 0 | 0 | 0 |
| 0 | 0 | 0 | 0 | 0 | 0 | 0 | 0 | 0 | 0 | 0 | 0 | 0 | 0 | 1 | 1 | 1 | 0 | 0 | 0 |
| 0 | 0 | 0 | 0 | 0 | 0 | 0 | 0 | 0 | 0 | 0 | 0 | 0 | 1 | 1 | 1 | 1 | 1 | 0 | 0 |
| 0 | 0 | 0 | 0 | 0 | 0 | 0 | 0 | 0 | 0 | 0 | 0 | 1 | 1 | 1 | 1 | 1 | 1 | 1 | 0 |
| 0 | 0 | 0 | 0 | 0 | 0 | 0 | 0 | 0 | 0 | 0 | 0 | 0 | 0 | 0 | 0 | 0 | 0 | 0 | 0 |

FIG. 6

701: Intercept a rendering command of a first application

702: Record a feature of the rendering command

703: Classify the rendering command as a static/ dynamic rendering command based on the feature

704: Generate a static/dynamic separation mask

FIG. 7

801: Identify a static/dynamic rendering command

802: Determine whether the command is the static rendering command

Yes

No

803: Reduce a shading rate

804: Maintain a shading rate unchanged

FIG. 8

Application layer

| Game application 1 | Game application 2 | Game application 3 | ... |

Game engine

Framework layer

| Interception module | Static/Dynamic rending command identification module | Pixel-level static/dynamic separation module |

| Rendering rate update module | Rendering reuse module | Reprojection module | Image output module |

Driver layer

Graphics driver

Hardware layer

| GPU | CPU |

FIG. 9

1001: Call a rendering interface of a first application

1004: Perform an original drawing procedure

Command reorganization layer

1002: Intercept a rendering command

1003: Identify a dynamic object and a static object

1006: Perform reprojection

1005: Update a shading rate

1007: Separate a dynamic pixel from a static pixel

1008: Perform static pixel rendering reuse

System kernel and driver

FIG. 10

| Game application | VR application | AR application | Another application |

Command reorganization layer, for intercepting a rendering API call

| Module for executing an original drawing procedure | Module provided in this application |

System kernel and driver

FIG. 11

$(2x-1)^{th}$ group of image data

$(2x)^{th}$ group of image data

1201: Identify a static/dynamic rendering command of a $(2x-1)^{th}$ frame of image

1204: Identify a static/dynamic rendering command of a $(2x)^{th}$ frame of image

1203: Generate a static/dynamic separation mask of the $(2x-1)^{th}$ frame of image

1207: Perform reprojection

1205: Generate a static/dynamic separation mask of the $(2x)^{th}$ frame of image

1202: Perform a normal rendering procedure

1206: Reduce a shading rate of a static object

1208: Perform static pixel shading reuse

$(2x-1)^{th}$ frame of image

$(2x)^{th}$ frame of image

FIG. 12

Image data of a $(2x-1)^{th}$ frame of image

Image data of a $(2x)^{th}$ frame of image

Static/Dynamic separation mask of the $(2x-1)^{th}$ frame of image

Static/Dynamic separation mask of the $(2x)^{th}$ frame of image

Reprojection

Static pixel shading reuse

$(2x)^{th}$ frame of image

FIG. 13

$(2x)^{th}$ group of image data

1401: Identify a static/dynamic rendering command of a $(2x)^{th}$ frame of image

1403: Execution step of an updated TAA module

Execution step of a native TAA module

1402: Reduce a shading rate of a static object

$(2x)^{th}$ frame of image

FIG. 14

Image data of a $(2x-1)^{th}$ frame of image

Image data of a $(2x)^{th}$ frame of image

Motion vector set of the $(2x-1)^{th}$ frame of image

Motion vector set of the $(2x)^{th}$ frame of image

Execution step of a native TAA module

Static pixel shading reuse

$(2x)^{th}$ frame of image

FIG. 15

1600

1610: Receive an $m^{th}$ group of to-be-rendered image data sent by an application

1620: Perform rendering based on all pixel values in the $m^{th}$ group of image data to generate an $m^{th}$ frame of image

1630: Receive an $(m+1)^{th}$ group of to-be-rendered image data sent by the application

1640: Perform rendering based on a static pixel of the $m^{th}$ frame of image and at least a part of pixel values in the $(m+1)^{th}$ group of image data to generate an $(m+1)^{th}$ frame of image

FIG. 16

## INTERNATIONAL SEARCH REPORT

| | International application No. |
|---|---|
| | **PCT/CN2024/113912** |

| **A.** | **CLASSIFICATION OF SUBJECT MATTER** |
|---|---|

G06T15/00(2011.01)i

According to International Patent Classification (IPC) or to both national classification and IPC

| **B.** | **FIELDS SEARCHED** |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, CNKI, VEN, ENTXT, WPABS, IEEE, CJFD, BING: 图像, 画面, 渲染, 绘制, 帧, 在前, 先前, 像素, 复用, 重用, 静态, 静止, image, Picture, render+, frame, previous, prior, pixel, reus+, static

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | US 2012176364 A1 (SCHARDT PAUL E. et al.) 12 July 2012 (2012-07-12) description, paragraphs 24-91 | 1-22 |
| A | CN 114359451 A (PIXELWORKS SEMICONDUCTOR TECHNOLOGY (SHANGHAI) CO., LTD.) 15 April 2022 (2022-04-15) entire document | 1-22 |
| A | CN 112686981 A (HUAWEI DEVICE CO., LTD.) 20 April 2021 (2021-04-20) entire document | 1-22 |
| A | CN 111542872 A (QUALCOMM INC.) 14 August 2020 (2020-08-14) entire document | 1-22 |
| A | CN 108765531 A (GUANGDONG OPPO MOBILE TELECOMMUNICATIONS CORP., LTD.) 06 November 2018 (2018-11-06) entire document | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 September 2024** | **24 October 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113912**

| Patent document cited in search report | | | Publication date (day/month/year) | Patent family member(s) | | | Publication date (day/month/year) |
|---|---|---|---|---|---|---|---|
| US | 2012176364 | A1 | 12 July 2012 | US | 8711163 | B2 | 29 April 2014 |
| CN | 114359451 | A | 15 April 2022 | US | 2022101504 | A1 | 31 March 2022 |
| | | | | US | 11922611 | B2 | 05 March 2024 |
| CN | 112686981 | A | 20 April 2021 | WO | 2021073448 | A1 | 22 April 2021 |
| | | | | EP | 4030387 | A1 | 20 July 2022 |
| | | | | EP | 4030387 | A4 | 26 October 2022 |
| | | | | US | 2023113571 | A1 | 13 April 2023 |
| | | | | US | 11861775 | B2 | 02 January 2024 |
| | | | | CN | 112686981 | B | 12 April 2024 |
| | | | | EP | 4030387 | B1 | 21 August 2024 |
| CN | 111542872 | A | 14 August 2020 | WO | 2019135910 | A1 | 11 July 2019 |
| | | | | US | 2019206111 | A1 | 04 July 2019 |
| | | | | US | 10789913 | B2 | 29 September 2020 |
| | | | | CN | 111542872 | B | 22 June 2021 |
| CN | 108765531 | A | 06 November 2018 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311102975
- CN 202311163041